(19) **Europäisches Patentamt / European Patent Office / Office européen des brevets**

(11) **EP 2 453 251 B1**

(12) **FASCICULE DE BREVET EUROPEEN**

(45) Date de publication et mention
de la délivrance du brevet:
**02.10.2013 Bulletin 2013/40**

(51) Int Cl.:
**G01S 7/36** (2006.01)     **G01S 13/24** (2006.01)

(21) Numéro de dépôt: **11187492.1**

(22) Date de dépôt: **02.11.2011**

(54) **Procédé pour réaliser une analyse haute résolution d'une zone de l'espace au moyen d'une onde pulsée agile en fréquence**

Verfahren zum Durchfüren einer hochauflösenden Analyse einer Raumzone mittels einer frequenzbeweglichen Pulswelle

Method for performing high-resolution analysis of an area of space by means of a frequency-agile pulsed wave

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.11.2010 FR 1004290**

(43) Date de publication de la demande:
**16.05.2012 Bulletin 2012/20**

(73) Titulaire: **Thales**
**92200 Neuilly Sur Seine (FR)**

(72) Inventeurs:
• **Desvignes, Jean-Pierre**
**78380 BOUGIVAL (FR)**
• **Delabbaye, JEAN-YVES**
**78125 VIEILLE-EGLISE EN YVELINES (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 1 855 125      EP-A1- 2 124 071**
**US-A1- 2008 284 641**

• **DUAN JUNQI ED - CACIOTTA M ET AL: "Multicarrier Coherent Pulse Shaping for Radar and Corresponding Signal Processing", ELECTRONIC MEASUREMENT AND INSTRUMENTS, 2007. ICEMI '07. 8TH INTERNATIONAL CONFERENCE ON, IEEE, PI, 1 août 2007 (2007-08-01), pages 3-843, XP031148585, ISBN: 978-1-4244-1135-1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention se rapporte au domaine général des systèmes de détection dont l'efficacité est conditionnée par une caractérisation en haute résolution des objets détectés, caractérisation aussi bien en termes de distance par rapport au système qu'en termes de signature Doppler.

L'invention se rapport plus particulièrement aux systèmes comportant l'émission d'impulsions sur une large bande spectrale.

En ce qui concerne les systèmes de détection un problème connu consiste à trouver un moyen pour obtenir des détections présentant une haute résolution, de façon à obtenir une définition des objets détectés qui soit la plus fine possible, en particulier pour éviter que deux objets proches soient détectés comme un seul et même objet.

Parmi ces systèmes on peut par exemple citer les radars et les autodirecteurs d'engins automatiques ou plus généralement des systèmes de détection terrestres ou spatiaux utilisant des ondes électromagnétiques; mais également les sonars utilisant des ondes acoustiques en milieu aquatique ou plus généralement en milieu liquide.

L'obtention d'images à haute résolution permet ainsi la mise en oeuvre de fonctions de discrimination et de reconnaissance, voire d'identification, des objets détectés, également appelés cibles.

Conventionnellement, on entend par "résolution" le pouvoir de séparation de deux points brillants voisins. La notion de "point brillant" renvoie quant à elle, de manière connue, à l'amplitude relative du signal émis ou réfléchi par un point donné de la zone de détection et reçu par le système, un point brillant correspondant à un objet, un réflecteur, émettant ou réfléchissant un signal et pour lequel le signal reçu par le système de détection présente un niveau significatif par rapport au niveau de signal reçu moyen.

Il est connu que la nature ondulatoire des signaux donne potentiellement accès à la haute résolution en ce qui concerne deux grandeurs physiques accessibles à la mesure, la distance d'une part, à laquelle on accède par la mesure de retards et dont la résolution est liée à la forme d'onde exploitée, et la vitesse radiale, accessible, du fait de l'effet Doppler, par mesures de décalages fréquentiels et dont la résolution est le plus souvent liée à la durée d'observation.

La demande de brevet européen EP 2 124 071 enseigne un procédé d'évaluation de la position et la vitesse d'une cible à l'aide d'un radar émettant une forme d'onde OFDM.

Il est également connu dans l'art antérieur, notamment par la publication de Duan Junqi intitulée " Multicarrier Coherent Pulse Shaping for Radar and Corresponding Signal Processing " (ICEMI'2007) une nouvelle forme d'impulsion basée sur une superposition cohérente de plusieurs porteuses pour les radars.

En l'état actuel de la technique, les systèmes de détection utilisent, en grande majorité, des formes d'ondes dites "cohérentes", c'est-à-dire des formes d'ondes permettant de contrôler et d'utiliser la phase des signaux pendant toute la durée d'émission, et large bande, la résolution sur la mesure de distance $\delta D$ étant en effet inversement proportionnelle à la bande de fréquence émise conformément à la relation:

$$\delta D = c / (2 \cdot B) \qquad [1]$$

dans laquelle B représente la largeur spectrale, la bande, de l'onde émise et c la vitesse de la lumière.

Il est à noter que, d'un point de vue formulation, les signaux qui sont manipulés dans le domaine de la détection peuvent avantageusement être représentés comme des fonctions continues du temps, S(t), définies sur l'ensemble des nombres complexes. Ces signaux, dits "analogiques" car continus sur l'axe des temps, peuvent être présentés sous les deux formes équivalentes:

- Une forme cartésienne pour laquelle on a S (t) =x (t) +i.y (t), *x* (*t*) et y (*t*) représentant les parties réelle et imaginaire du signal;
- une forme polaire pour laquelle on a S (t) = A (t) ·exp [i·Φ (t) ], A (t) et Φ (t) représentant l'amplitude et la phase du signal;

Le symbole i représentant le nombre égal à la racine carrée de -1.

A ce jour, les formes d'ondes compatibles d'un traitement de détection à haute résolution mises en oeuvre par les systèmes de détection sont principalement:

- des formes d'onde à codes de phase pour lesquels la phase Φ(t) du signal émis est modulée au cours du temps;
- des formes d'onde à codes de fréquence pour lesquels la fréquence f(t) est modulée au cours du temps, selon une loi de modulation linéaire de type "f(t) = $\alpha$.t" par exemple.

Pour mémoire, on rappelle que la fréquence d'un signal est, au coefficient $1/(2\pi)$ près, la dérivée temporelle de sa phase, conformément à la relation:

$$f(t) = \frac{1}{2\pi} \frac{d\Phi(t)}{dt} \qquad\qquad [2]$$

D'un point de vue opérationnel, ces deux types de formes d'ondes "cohérentes" ne sont pas sans inconvénient.

En effet, pour des raisons techniques connues, liées en particulier à la mise en oeuvre d'émetteurs large bande, on utilise généralement des formes d'ondes codées dont la bande passante est limitée à une largeur spectrale juste nécessaire pour garantir la résolution distance souhaitée. Or une telle largeur de spectre n'est généralement aujourd'hui pas suffisante pour rendre difficile la mise en oeuvre d'un brouilleur capable de concentrer toute sa puissance d'émission dans la bande considérée et empêcher ainsi toute détection.

Par ailleurs, il existe de nos jours des systèmes de brouillage intelligents, capables de "décoder" ces formes d'ondes codées, par nature prédictibles, de sorte que l'efficacité du brouillage exercé est alors renforcée.

Pour contrer le brouillage, on utilise classiquement des émissions dites "à agilité de fréquence". Ces émissions mettent en oeuvre des formes d'ondes décrites par des séquences d'impulsions, modulées ou non, dont les fréquences porteuses varient au cours du temps, d'une impulsion à l'autre, suivant une loi de variation à caractère pseudo-aléatoire. Ces formes d'ondes émises sont ainsi, par nature, non prédictibles.

Cependant, jusqu'à un passé récent, la synthèse et l'émission des signaux correspondant à ces formes d'onde ainsi que leur démodulation à la réception, étaient réalisées, faute de moyens appropriés, par des systèmes "incohérents", c'est-à-dire ne permettant pas de conserver une référence de phase constante et donc d'exploiter la phase des signaux reçus.

Par suite l'exploitation de telles formes d'ondes ne permettait pas d'appliquer un traitement de détection à haute résolution au signal reçu.

Or de nos jours, il est possible de disposer de moyens permettant de réaliser la synthèse de trains d'impulsions agiles en fréquence, pour lesquels la fréquence varie d'une impulsion à l'autre et pour lesquels la cohérence de phase est maintenue pendant toute la durée de la récurrence. Par suite, il est possible d'appliquer au signal reçu un traitement cohérent à haute résolution, aussi bien en distance (liée à la bande émise) qu'en vitesse (ou Doppler, liée à la durée observée).

Cependant, il n'existe à l'heure actuelle aucun système mettant en oeuvre une forme d'onde agile permettant de résister au brouillage et disposant d'un traitement permettant une détection à haute résolution des cibles présentes dans la zone observée, la mise en oeuvre d'une forme d'ondes à agilité de fréquence complexifiant généralement de manière sensible la mise en oeuvre des traitements à haute résolution existants.

Un but de l'invention est de définir un procédé applicable au système de détection capable de mettre en oeuvre des formes d'ondes agiles en fréquence et permettant de réaliser la détection d'objet en haute résolution aussi bien en distance qu'en vitesse (i.e. en Doppler).

A cet effet l'invention a pour objet un procédé pour réaliser une analyse haute résolution en distance et en Doppler des signaux radioélectriques reçus en provenance d'une zone de l'espace donnée, les signaux reçus étant analysés en bande de base, après application d'un filtrage adapté, au travers de portes distance, dites naturelles, définies par la largeur de la réponse du filtre adapté appliqué, caractérisé en ce qu'il comporte:

-   l'émission d'une forme d'onde particulière comportant M paquets de K impulsions, appelés motifs, de durée $T_i$, émise avec une période de récurrence T, les fréquences des K impulsions étant déterminées dans une bande de fréquence allouée B donnée, les fréquences des impulsions formant un même motif m étant définies dans la bande B, pour deux récurrences quelconques k et k' par la relation:

$$P_m(k) - P_m(k') = S(k,k')$$

où S(k, k') représente une fonction quelconque de k et k' indépendante de m, $P_m(k)$ représentant une réalisation de tirages aléatoires tous différents des fréquences émises pour les K récurrences du motif m;

-   la réception du signal provenant de la zone de l'espace considérée et l'échantillonnage du signal reçu pour chacune des portes distance naturelles, de largeur $2T_i$, le signal étant échantillonné en retard et en Doppler suivant un pas d'échantillonnage $(\delta\tau, \delta\varphi)$ défini par la relation:

$$\begin{cases} \delta\tau = 1/(N \cdot \Delta f) = 1/B, \\ \\ \delta\varphi = 1/(M \cdot K \cdot T) \end{cases}$$

où N est le nombre de valeurs que peut prendre la fonction $P_m(k)$, c'est à dire le nombre de fréquences allouées, et où M·K est le nombre total d'impulsions émises. La porte distance naturelle est ainsi découpée en cellules d'analyse élémentaires, chaque cellule élémentaire étant repérée par les paramètres 1 et j caractérisant sa position en distance et en Doppler dans l'espace d'échantillonnage de la porte distance naturelle;

- le traitement du signal reçu pour une porte distance donnée, ce traitement comportant:
- la mise en forme des échantillons de signal reçu correspondant spatialement à la porte distance considérée, sous la forme de M vecteurs de mesures $x_m$, chaque vecteur ayant pour composantes les K échantillons de signal reçu correspondant temporellement aux K récurrences du motif m;
- le calcul de l'estimée $\hat{R}$ de la matrice de covariance R des M vecteurs de mesure $x_m$;
- l'exécution d'une opération de caractérisation qui consiste à calculer, pour chaque cellule d'analyse (1, j), une grandeur permettant de réaliser une estimation du niveau de signal reçu dans la cellule d'analyse considérée et susceptible de provenir d'un réflecteur localisé dans la porte distance correspondante à la distance caractérisant cette cellule (1, j), la valeur de cette grandeur étant déterminée à partir de l'intégration cohérente des vecteurs $x_m$ sur l'ensemble des motifs et de la matrice estimée $\hat{R}$.
- l'élaboration d'une table comportant pour chaque cellule d'analyse la valeur de la grandeur considérée.

Selon un mode de mise en oeuvre préféré du procédé selon l'invention, $P_m(k)$ est défini par la relation:

$$P_m(k) \equiv (P(k) + \mu_m) \ [N],$$

P (k) et $\mu_m$ représentant des nombres entiers aléatoires, tous les nombres entiers aléatoires, P (0), P (1), ···, P (K- 1), $\mu_m$ étant équi- répartis dans le domaine [0, N [.

Chacune des fréquences $f_k^m$ des impulsions formant un motif m donné est définie, pour une impulsion k du motif, par la relation suivante:

$$f_k^m = f_0 + P_m(k) \cdot \Delta f,$$

dans laquelle $f_0$ est la fréquence porteuse de base des impulsions émises et $\Delta f$ le pas de quantification des fréquences d'émission défini par $\Delta f = B/N$;

Selon une variante de mise en oeuvre particulière, la grandeur caractérisant le niveau de signal reçu pour une cellule d'analyse $(l_0, j_0)$ donnée, calculée par le traitement du signal, est l'estimation d'énergie $\hat{\rho}^2(l_0, j_0)$ définie par la relation:

$$\hat{\rho}^2(l_0, j_0) = \left| \frac{b^H(l_0, j_0) \cdot \hat{R}^{-1} \cdot z(l_0, j_0)}{b^H(l_0, j_0) \cdot \hat{R}^{-1} \cdot b(l_0, j_0)} \right|^2,$$

dans laquelle $b(l_0, j_0)$ est un vecteur ayant pour expression:

$$b(l_0, j_0) = (\cdots, \exp[i \cdot \Psi_k(l_0, j_0)] \cdots)^T,$$

avec

$$\Psi_k(l_0, j_0) = 2\pi \cdot [k \cdot j_0 / (M \cdot K) - P(k) \cdot l_0 / N],$$

et $z(l_0, j_0)$ un vecteur ayant pour expression:

$$z(l_0, j_0) = \frac{1}{M} \sum_{m=0}^{M-1} x_m \exp -[i \cdot \Phi_m(l_0, j_0)]$$

avec

$$\Phi_m(l_0, j_0) = 2\pi \cdot (m \cdot j_0 / M - \mu_m \cdot l_0 / N)$$

Selon une forme préférée de cette variante, le traitement appliqué au signal reçu comporte:

- une première étape du traitement qui consiste à acquérir les termes $P(k)$ et $\mu_m$ définissant les motifs utilisés à l'émission.

-

  une deuxième étape qui consiste à conditionner les $K \cdot M$ échantillons $x_k^m$ du signal reçu sous la forme de M vecteurs de mesure $x_m$, chaque vecteur ayant pour composantes les K échantillons correspondant au K récurrences d'un même motif m qui sont définis par la relation:

$$x_m = \left(x_0^m, x_1^m, ..., x_{K-1}^m\right)^T$$

où $x_k^m$ représente l'échantillon de signal reçu correspondant à l'émission de l'impulsion k du motif m;
- une troisième étape qui consiste à déterminer l'estimation $\hat{R}$ de la matrice de covariance R des M vecteurs de mesure $x_m$, $\hat{R}$ étant définie par la relation suivante:

$$\hat{R} = \frac{1}{M} \sum_{m=0}^{M-1} x_m \cdot x_m^H,$$

- Une quatrième étape qui considère et traite les cellules d'analyse élémentaires (l, j) l'une après l'autre et détermine pour chaque cellule la valeur de la grandeur $\hat{\rho}^2(l, j)$;

l'exécution de la quatrième étape conduisant à l'élaboration d'une table comportant pour chaque cellule d'analyse la valeur de la grandeur $\hat{\rho}^2(l, j)$.
Selon une forme préférée de cette variante de mise en oeuvre, la quatrième étape du traitement met en oeuvre trois boucles de traitement imbriquées:

- une boucle de premier niveau, qui exécute pour chacune des cellules d'analyse élémentaire (l, j) une opération itérative consistant à chaque itération à considérer un motif particulier, et à calculer, la valeur courante du vecteur z(l, j) définie par la relation suivante:

$$z = z + x_m \cdot \exp\left[-i \cdot \Phi_m(l, j)\right],$$

chaque itération étant terminée par un test permettant de déterminer si l'ensemble des M motifs a été pris en compte et de relancer une itération si tel n'est pas le cas.

- une boucle de deuxième niveau qui, pour chacune des cellules d'analyse $(1, j)$ correspondant à une même valeur du paramètre de Doppler $j$, exécute de manière itérative une opération d'initialisation à 0 du vecteur $z$ et de construction du vecteur $b$, puis lance l'exécution de la boucle de premier niveau et l'exécution de l'opération de calcul de $\hat{\rho}^2(l, j)$; chaque itération étant terminée par un test permettant de déterminer si l'ensemble des valeurs du paramètre $1$ a été pris en compte et de relancer une itération si tel n'est pas le cas.

- une boucle de troisième niveau, qui gère l'ensemble des valeurs du paramètre de Doppler $j$ et lance l'exécution itérative de la boucle de deuxième niveau pour chaque valeur de $j$; chaque itération étant terminée par un test permettant de déterminer si l'ensemble des valeurs du paramètre $j$ a été pris en compte et de relancer une itération si tel n'est pas le cas.

Selon une autre variante de mise en oeuvre particulière du procédé selon l'invention, la grandeur caractérisant le niveau de signal reçu calculé pour une cellule d'analyse $(l_0, j_0)$ donnée, calculée par le traitement du signal, est une grandeur $\gamma(l_0, j_0)$ définie par la relation:

$$\gamma(l_0, j_0) = \frac{\left| b^H(l_0, j_0) \cdot \hat{R}^{-1} \cdot z(l_0, j_0)^2 \right|}{b^H(l_0, j_0) \cdot \hat{R}^{-1} \cdot b(l_0, j_0)},$$

dans laquelle $b(l_0, j_0)$ est un vecteur ayant pour expression:

$$b(l_0, j_0) = \left( \cdots, \exp\left[i \cdot \Psi_k(l_0, j_0)\right], \cdots \right)^T$$

avec

$$\Psi_k(l_0, j_0) = 2\pi \cdot \left[ k \cdot j_0 /(M \cdot K) - P(k) \cdot l_0 / N \right],$$

et $z(l_0, j_0)$ un vecteur ayant pour expression:

$$z(l_0, j_0) = \frac{1}{M} \sum_{m=0}^{M-1} x_m \exp - \left[ i \cdot \Phi_m(l_0, j_0) \right]$$

avec

$$\Phi_m(l_0, j_0) = 2\pi.\left( m \cdot j_0 / M - \mu_m \cdot l_0 / N \right);$$

cette grandeur étant utilisée pour réaliser la détection des réflecteurs, une détection étant constatée lorsque $\gamma(l_0, j_0)$ a une valeur supérieure à un seuil fixé, ce seuil étant fonction d'une probabilité de fausse alarme donnée.

Selon une forme préférée de cette autre variante, le traitement appliqué au signal reçu le traitement implémenté pour chaque porte distance comporte:

- une première étape du traitement qui consiste à acquérir les termes P(k) et $\mu_m$ définissant les motifs utilisés à l'émission et sauvegardés à cet effet.

-

une deuxième étape qui consiste à conditionner les K·M échantillons $x_k^m$ du signal reçu sous la forme de M vecteurs de mesure $x_m$, chaque vecteur ayant pour composantes les K échantillons correspondant au K récurrences d'un même motif m étant défini par la relation:

$$x_m = \left( x_0^m, x_1^m, ..., x_{K-1}^m \right)^T$$

où $x_k^m$ représente l'échantillon de signal reçu correspondant à l'émission de l'impulsion k du motif m;

- une troisième étape qui consiste à déterminer l'estimation $\hat{R}$ de la matrice de covariance R des M vecteurs de mesure $x_m$, $\hat{R}$ étant définie par la relation suivante:

$$\hat{R} = \frac{1}{M} \sum_{m=0}^{M-1} x_m \cdot x_m^H,$$

- Une quatrième étape qui considère et traite les cellules d'analyse élémentaires (l, j) l'une après l'autre et détermine pour chaque cellule la valeur de la grandeur y(l, j) et à déterminer si un réflecteur est détecté dans la cellule considérée;

l'exécution de la quatrième étape conduisant à l'élaboration d'une table comportant pour chaque cellule d'analyse la valeur 1 ou 0 du critère de détection.

Selon une forme préférée de cette variante de mise en oeuvre, la quatrième étape du traitement met en oeuvre trois boucles de traitement imbriquées:

- une boucle de premier niveau, qui exécute pour chacune des cellules d'analyse élémentaire (l, j) une opération itérative consistant à chaque itération à considérer un motif particulier, et à calculer, la valeur courante du vecteur z(l, j) définie par la relation suivante:

$$z = z + x_m \cdot \exp\left[ -i \cdot \Phi_m(l, j) \right],$$

chaque itération étant terminée par un test permettant de déterminer si l'ensemble des M motifs a été pris en compte et de relancer une itération si tel n'est pas le cas.
- une boucle de deuxième niveau qui, pour chacune des cellules d'analyse (l, $j_0$)correspondant à une même valeur du paramètre de Doppler j, exécute de manière itérative une opération d'initialisation à 0 du vecteur z et de construction du vecteur b, puis lance l'exécution de la boucle de premier niveau et l'exécution de l'opération de calcul de γ(l, j); et de détermination de la valeur du critère de détection, chaque itération étant terminée par un test permettant de déterminer si l'ensemble des valeurs du paramètre 1 a été pris en compte et de relancer une itération si tel n'est pas le cas.
- une boucle de troisième niveau, qui gère l'ensemble des valeurs du paramètre de Doppler j et lance l'exécution itérative de la boucle de deuxième niveau pour chaque valeur de j; chaque itération étant terminée par un test permettant de déterminer si l'ensemble des valeurs du paramètre j a été pris en compte et de relancer une itération si tel n'est pas le cas.

Selon un mode de mise en oeuvre préféré du procédé selon l'invention, le filtrage adapté appliqué au signal reçu étant configuré de façon à former des portes distance naturelles de durée $2T_i$ espacées dans le temps de l'intervalle de temps $\Delta\tau_c$ inférieur à $2T_i$ et dont le gain varie en décroissant depuis le centre de la porte jusqu'à ses limites inférieure et supérieure, $\Delta\tau_c$ est déterminé de telle sorte que le signal reçu puisse toujours être analysé dans une zone centrale de la porte distance de largeur $\Delta\tau_c$ pour laquelle il présente une atténuation par rapport au niveau maximum délivré par le filtre adapté inférieure à une valeur donnée α; l'analyse à haute résolution du signal reçu pour chaque porte distance étant alors limitée en distance à un intervalle centré correspondant à $\Delta\tau_c$.

Selon une forme particulière de ce mode de mise en oeuvre préféré, le filtre adapté définissant des portes distance naturelles dont le gain varie en décroissant linéairement depuis le centre de la porte jusqu'à ses limites inférieure et supérieure, la valeur de l'intervalle de temps $\Delta\tau_c$ est déterminé par la relation suivante:

$$\Delta\tau_C = 2.T_i.(1-\alpha) \qquad \alpha \in \,]0,1[$$

où $\alpha$ représente l'atténuation maximale tolérée, normalisée à 1.

Selon une variante de mise en oeuvre du procédé selon l'invention pour laquelle l'analyse haute résolution met en oeuvre un double échantillonnage en distance et en Doppler suivant deux pas d'échantillonnage ($\delta\tau$, $\delta\varphi$) identiques décalés d'un demi pas en distance, de façon à ce qu'une porte distance soit maillée par des cellule d'analyse élémentaires (l, j) constituant deux groupes, un premier groupe de cellules définies par un paramètre 1 prenant des valeurs entières paires et un second groupe de cellules définies par un paramètre 1 prenant des valeurs entières impaires. Par suite, le traitement mis en oeuvre par le procédé comporte en outre:

- un étape complémentaire exécutée entre l'étape de mise en forme des échantillons de signal reçu sous la forme de M vecteurs de mesures $x_m$, et l'étape de calcul de la matrice de l'estimée $\hat{R}$ de la matrice de covariance R; cette étape effectuant la construction de deux jeux de vecteurs de mesure $y_m[0]$ et $y_m[1]$, définis par les relations suivantes:

$$y_k^m[0] = x_k^m$$

et $y_k^m[1] = \pm x_k^m$ suivant la parité du résultat de la division entière de $P(k)+\mu_m$ par N.

- une étape de calcul des estimées $\hat{R}[0]$ et $\hat{R}[1]$ des matrices de covariance R[0] et R[1] des M vecteurs de mesure $y_m[0]$ et $y_m[1]$; cette étape venant se substituer à l'étape de calcul de l'estimée $\hat{R}$ de la matrice de covariance R des M vecteurs de mesure $x_m$;

- une opération de choix préalable à l'exécution de la boucle de niveau 1 de la quatrième étape ayant pour objet d'effectuer, pour la cellule d'analyse élémentaire ($l_0$, $j_0$) considérée, le test de la parité du paramètre $l_0$ et de déterminer lequel des vecteurs $y_m[0]$ et $y_m[1]$ et laquelle des estimées $\hat{R}[0]$ et $\hat{R}[1]$ de la matrice de covariance doivent être utilisés pour exécuter la boucle de niveau 1 pour la cellule considérée; la boucle de niveau 1 étant exécutée en utilisant $y_m[0]$ et $\hat{R}[0]$ si $l_0$ est pair et en utilisant $y_m[1]$ et $\hat{R}[1]$ si $l_0$ est impair.

Les caractéristiques et avantages de l'invention seront mieux appréciés grâce à la description qui suit, description qui s'appuie sur les figures annexées qui représentent:

- les figures 1 à 3, des chronogrammes illustrant le type de formes d'onde mises en oeuvre préférentiellement par le procédé selon l'invention;
- la figure 4, une représentation graphique de la pondération en triangle résultant de l'application d'un filtre adapté à une impulsion non modulée reçu par le système mettant oeuvre le procédé selon l'invention;
- la figure 5, une représentation graphique du module de la fonction de pondération G ($\Delta\tau$, $\Delta\varphi$) dans un plan défini par deux axes Distance- Doppler, cette fonction étant à la base du principe d'échantillonnage d'une porte distance considéré par le procédé selon l'invention;
- la figure 6, une illustration de la grille d'analyse mise en oeuvre par le procédé selon l'invention pour effectuer l'analyse haute résolution d'une porte distance naturelle;
- la figure 7, l'organigramme du traitement mis en oeuvre par le procédé selon l'invention selon une première forme de réalisation;
- la figure 8, l'organigramme du traitement mis en oeuvre par le procédé selon l'invention selon une deuxième forme de réalisation;
- la figure 9, un chronogramme illustrant l'agencement des différentes portes distance dans une forme préférée de mise en oeuvre du procédé selon l'invention;
- la figure 10, l'organigramme du traitement mis en oeuvre par le procédé selon l'invention selon une troisième forme de réalisation.

Le procédé selon l'invention repose dans un premier temps sur la mise en oeuvre, l'émission, d'une forme d'onde particulière.

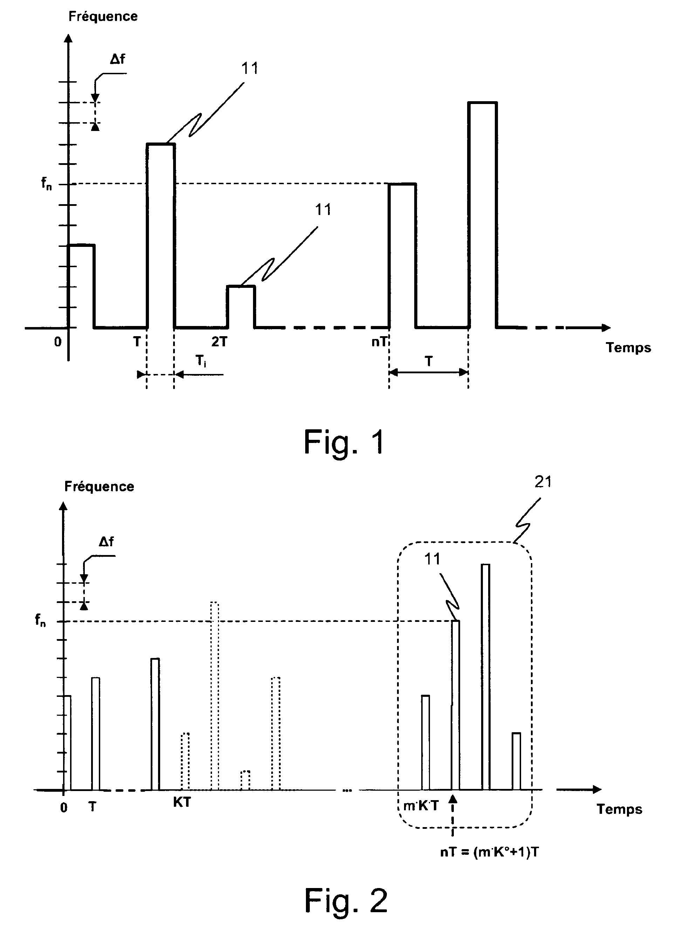

L'onde émise est ici une séquence de N impulsions 11 non modulées, régulièrement espacées dans le temps d'une période T, comme schématisé sur la figure 1. Chaque impulsion de rang n est émise à une fréquence $f_n$ donnée. L'intervalle de temps T séparant deux impulsions est, de manière conventionnelle, appelé "récurrence". Ainsi, l'origine des temps étant placée à l'instant de début de la première impulsion de la séquence, une récurrence d'indice courant n correspond au segment temporel [n·T, (n+l) ·T [ séparant le début (i.e. à l'instant d'émission) de la $n^{ième}$ impulsion de celui de la n+1$^{ème}$ impulsion. Chaque impulsion n a, par ailleurs, une durée fixe $T_i$ durant laquelle est émise une onde de fréquence $f_n$ donnée.

Selon l'invention les récurrences constituant la forme d'onde sont groupées en M paquets appelés "motifs", comme schématisé à la figure 2.

Chaque motif 21, de rang m, comporte K récurrences, chaque récurrence du motif étant repérée par un indice k à l'intérieur du motif. De la sorte, la forme d'onde est constituée de N = M·K récurrences. Par suite, l'indice courant n d'une récurrence dans la forme d'onde s'écrit n = m·K + k avec $0 \le k < K$, m représentant l'indice du motif auquel la récurrence est attachée. La fréquence $f_n$ de l'onde émise pour cette impulsion n est, quant à elle, notée $f_k^m$.

Selon l'invention, les fréquences $f_k^m$ sont tirées aléatoirement parmi une suite de N fréquences quantifiées avec un pas $\Delta f = B/N$ où B représente une bande spectrale de largeur au moins égale à la largeur de bande minimale nécessaire pour obtenir la résolution en distance visée. Les tirages introduisent ainsi un caractère pseudo- aléatoire dans l'ordre d'émission des fréquences, une fréquence $f_k^m$ étant définie par la relation générale suivante:

$$f_k^m = f_0 + P_m(k) \cdot \Delta f \qquad [3]$$

où $f_0$ est la fréquence porteuse de base et $P_m(k)$ l'application de l'ensemble {0, 1, ⋯, (K- 1) } des rangs des récurrences dans le motif m dans l'ensemble {0, 1, ⋯, (N- 1) } des rangs des fréquences dans l'ensemble des fréquences allouées à la forme d'onde. $P_m(k)$ caractérise ainsi la loi de tirage des fréquences pour les K récurrences du motif m.

Selon l'invention également, l'application $P_m(k)$ est considérée sous la forme suivante:

$$P_m(k) \equiv (P(k) + \mu_m) \ [N] \qquad [4]$$

où la notation ... [N] désigne l'opération de congruence "modulo N".

P (k) et $\mu_m$ représentent des nombres entiers aléatoires, tous les nombres entiers aléatoires P (0), P (1), ⋯, P (K- 1), $\mu_m$ étant équi- répartis dans le domaine [0, N [.

Exprimé sous cette dernière forme, un motif m quelconque apparaît donc, selon l'invention, comme la réplique d'un motif générique donné, défini par l'application P (k), translaté en fréquence d'une quantité $\mu_m \cdot \Delta f$, propre à chaque motif m, et recyclé dans le domaine [0, (N- 1) ·Δf] qui couvre la bande spectrale dédiée à la forme d'onde.

Selon l'invention, le motif générique décrit par P(k) contient préférentiellement peu de récurrences (typiquement K<10). On parle pour cette raison de "micro-motif" ou encore de "μ-motif".

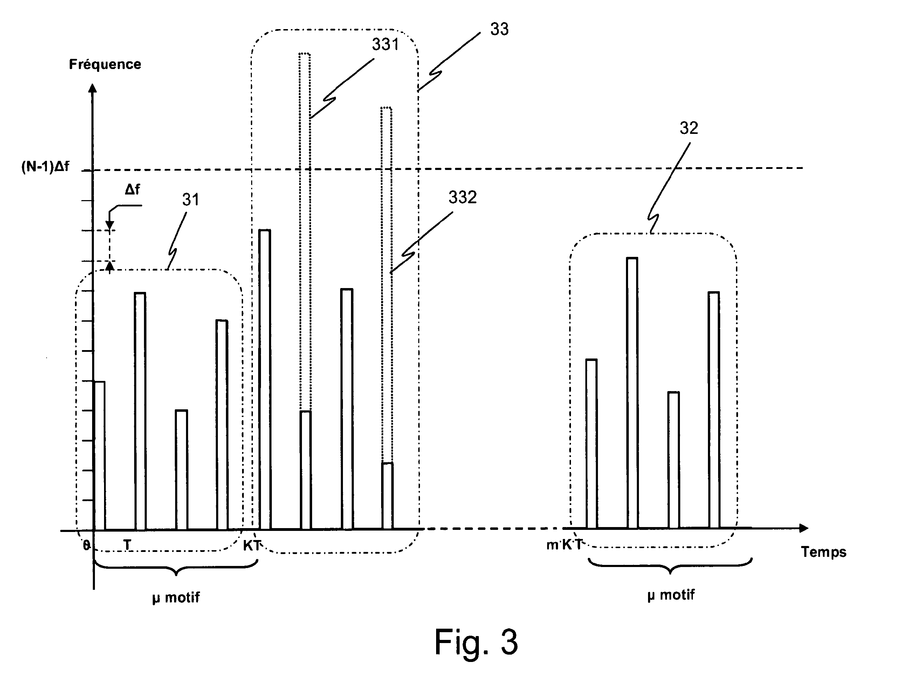

Le type de forme d'onde obtenu par la mise en oeuvre de ce procédé d'attribution des fréquences aux diverses récurrences est illustré par l'exemple de la figure 3, sur laquelle sont représentés, en trait plein, trois μ-motifs à quatre récurrences, motifs constitués à partir d'un même motif générique. Conformément à l'invention, le μ-motif 31 et le μ-motif 32 sont constitués par translation en fréquence directe du motif générique de la valeur $\mu_m \cdot \Delta f$ correspondante. Le μ-motif 33 fait quant à lui l'objet, après translation, d'un recyclage des fréquences calculées pour les deuxième 331 et quatrième 332 récurrences (en traits pointillés), dans le domaine fréquentiel correspondant à la forme d'onde (translation de -N·Δf).

Il est à noter que quoique possédant apparemment un certain caractère déterministe, ce principe de détermination de la fréquence associée à une récurrence donnée assure avantageusement le maintien du caractère pseudo-aléatoire du train des impulsions émises sur la durée d'observation, caractère indispensable à une certaine robustesse vis-à-vis des contre-mesures.

La forme d'onde mise en oeuvre par le procédé selon l'invention, permet avantageusement de rayonner un signal e (t) qui peut être décrit par la relation suivante:

$$e(t) = \sum_{m=0}^{M-1} \sum_{k=0}^{K-1} \exp\left(i2\pi \cdot f_k^m \cdot t\right) \cdot rect\left(\frac{t - (m \cdot K + k) \cdot T}{T_i}\right) \qquad [5]$$

où la fonction "rect (x) " représente la fonction "porte" définie sur l'intervalle ]- ∞+∞ [ par:

$$rect(x) = \begin{cases} 1 \text{ pour } x \in [0, 1[ \\ 0 \text{ pour } x \notin [0, 1[ \end{cases}$$

Le signal e(t) rayonné est ensuite réfléchi par l'ensemble des P réflecteurs constituant les cibles et l'environnement. Chaque réflecteur p réfléchit, de manière connue, une réplique $r_p(t)$ du signal e(t) émis, cette réplique correspondant au signal e(t) affecté d'un retard $\tau_p$ et d'un coefficient complexe $a_p$.

Par suite, les signaux réfléchis recueillis par le récepteur formant un signal global reçu r(t), ce signal r(t) s'écrit comme la superposition additive des contributions $r_p(t)$ des P réflecteurs éclairés par le signal e(t):

$$r(t) = \sum_{p=0}^{P-1} a_p \cdot e\left[t - \tau_p(t)\right] + w(t) \qquad [6]$$

où w(t) représente le bruit thermique, signal aléatoire complexe, blanc, gaussien et centré, dont les parties réelle et imaginaire, indépendantes, sont identiquement distribuées et ont pour variance $\sigma^2$.

Les réflecteurs étant généralement des objets mobiles animés d'un mouvement relatif par rapport au radar, le retard $\tau_p$ est une fonction du temps. Cependant, pour les durées de traitement usuellement envisagées, considérées comme très courtes comparativement aux constantes de temps des mouvements relatifs radar/réflecteurs. On considère généralement que la fonction d'évolution du retard $\tau_p$ est une loi linéaire de la forme:

$$\tau_p(t) = \tau_{0p} - \left(\varphi_p / f_0\right) \cdot t \qquad [7]$$

où $\tau_{0p}$ est une constante.

$\varphi_p$ représente ici le Doppler du réflecteur (I.e. le décalage en fréquence dû à l'effet Doppler occasionné par le mouvement du réflecteur) pour la fréquence $f_0$.

On rappelle pour mémoire que la notion de retard (retard de propagation) est équivalente à celle de distance, les deux quantités étant liées par la relation $\tau =_2 \cdot D/c$ où c est la vitesse de la lumière et où le facteur "2" rend compte du trajet aller-retour de l'onde.

On rappelle également que la notion de Doppler est équivalente à la notion de vitesse radiale, les deux grandeurs étant liées par la relation $\varphi = 2 \cdot V / \lambda$ où $\lambda$ est la longueur d'onde.

De manière générale, avant d'être soumis à un traitement, le signal r(t) reçu passe dans la chaîne de réception qui effectue, récurrence par récurrence, un certain nombre d'opérations de mise en forme, parmi lesquelles on trouve de manière connue:

- la démodulation de la porteuse $f_k^m$ qui permet de translater le signal reçu en bande de base;
- la suppression du Doppler moyen $\varphi$ affectant le signal reçu, ce Doppler moyen étant par exemple défini, à partir de la vitesse $\vec{V}$ du porteur et de la direction moyenne $\vec{u}$ des réflecteurs, par la relation suivante:

$$\varphi = \left(2/\lambda_0\right)\cdot \vec{V}\cdot \vec{u}, \quad \text{avec } \lambda_0 = c/f_0,$$

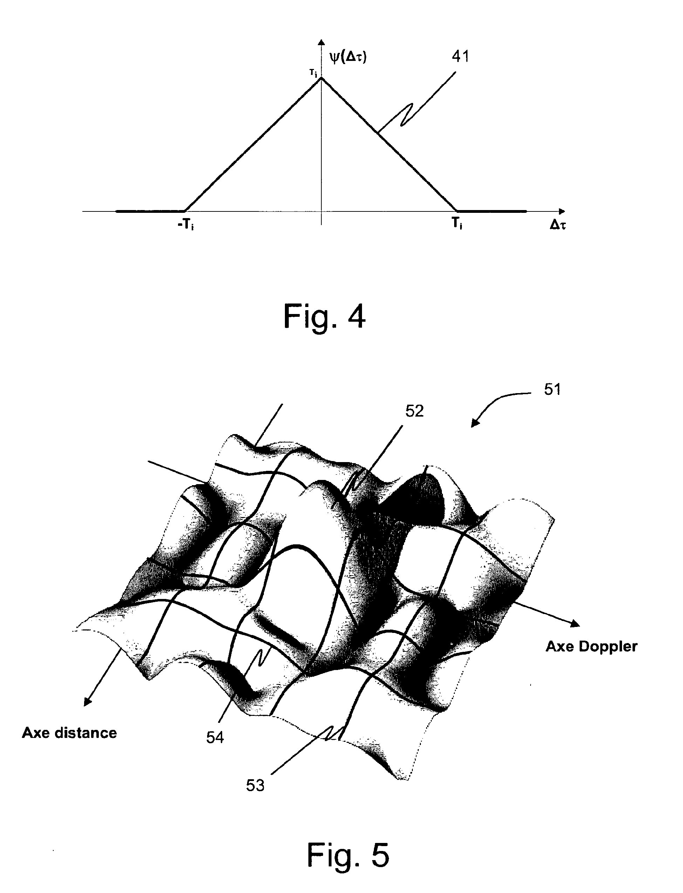

- un opération de filtrage ayant pour objet la formation des portes distance dites naturelles. Dans la forme d'implémentation la plus simple, l'application d'un filtre adapté à une impulsion non modulée introduit une pondération en triangle des portes distance naturelles formées 41, comme cela est schématisé sur la figure 4. Cette pondération assimile la largeur de la porte (exprimée en fonction du retard $\Delta\tau$) à la longueur du segment centré $[-T_i, T_i]$ où $T_i$ est la durée de l'impulsion.
- Une opération d'échantillonnage en sortie de filtre.

En sortie de la chaîne d'opérations décrites précédemment, on dispose ainsi pour chaque porte distance naturelle, définies par la largeur de la réponse du filtre adapté appliqué, d'un signal dit numérisé, constitué d'échantillons (nombres complexes) pouvant faire l'objet d'un traitement numérique implémenté dans un calculateur.

. Par suite, moyennant quelques manipulations mathématiques et l'hypothèse non contraignante que $f_k^m / f_0 \ll 1$, les échantillons du signal reçu consécutivement à la forme d'onde considérée précédemment s'écrivent:

$$x_k^m = \sum_{p=0}^{P-1} a_p \cdot \exp\left[-i2\pi \cdot P_m(k)\cdot \Delta f \cdot \Delta\tau_p\right]\cdot \exp\left[i2\pi \cdot (m\cdot K + k)\cdot T \cdot \Delta\varphi_p\right] + w_k^m \quad [8]$$

où $(a_p, \Delta\tau_p, \Delta\varphi_p)$ sont des paramètres caractérisant le réflecteur p et $w_k^m$ le bruit thermique discrétisé.

$a_p$, $\Delta\tau_p$ et $\Delta\varphi_p$ représentent respectivement l'amplitude complexe, le retard et le Doppler différentiels relativement à la porte distance traitée pour le premier et au Doppler moyen de la démodulation pour le second.

Le bruit thermique discrétisé $w_k^m$ conserve quant à lui ses propriétés statistiques initiales après action des opérateurs linéaires de la chaîne de réception.

Ainsi, comme on peut le constater en considérant la relation [8] précédente, la sélection par l'invention d'une forme d'onde présentant une agilité de fréquence matérialisée par la fonction $P_m(k)$ permet avantageusement d'obtenir un signal réfléchi échantillonné dont les échantillons ont, sous forme polaire, une expression dans laquelle le terme de phase se présente sous la forme de deux termes additifs séparés, un terme relatif aux retards et un terme relatif aux Dopplers. Une telle séparation des contributions des retards et des Dopplers dans l'expression de la phase d'un échantillon de signal reçu n'est notamment pas possible si l'on définit une forme d'onde comme une fonction linéaire en m et en k.

Le procédé selon l'invention repose dans un second temps sur la mise en oeuvre d'un traitement particulier, appliqué aux échantillons du signal reçu, traitement rendu possible par l'utilisation de la forme d'onde décrite précédemment. Le traitement selon l'invention, est appliqué aux échantillons d'une porte distance naturelle pour réaliser la discrimination des différents points brillants qu'elle contient. Ce traitement est évidemment destiné à être implémenté pour toutes les portes distance à considérer en l'espèce.

Selon l'invention les échantillons de signal reçus pour chacune des portes distance sont traités de façon systématique au travers d'une grille d'analyse qui définit la résolution en distance et en Doppler de l'analyse réalisée. Autrement dit les valeurs des paramètres $\Delta\tau_p$ et $\Delta\varphi_p$ qui définissent un échantillon $x_k^m$ sont quantifiées par des valeurs discrètes avec un pas de quantification $(\delta\tau, \delta\varphi)$. On introduit ainsi une grille d'analyse Distance- Doppler, ou "carte", dont la maille est définie par $(\delta\tau, \delta\varphi)$. Par suite, le signal $\left\{x_k^m\right\}$ peut être discrétisé, au travers de cette grille, par la mesure du signal reçu dans chacune des cellules élémentaires constituant la grille. Il peut alors être défini par la relation suivante:

$$x_k^m = \sum_{l,j} a_l^j \cdot \exp\left[-i2\pi \cdot P_m(k)\cdot \Delta f \cdot l \cdot \delta\tau\right]\cdot \exp\left[i2\pi \cdot (m.K + k)\cdot T \cdot j \cdot \delta\varphi\right] + w_k^m \quad [9]$$

où les indices l et j représentent les indices définissant, en distance et en Doppler, la position d'une cellule d'analyse élémentaire.

Chaque échantillon de signal $x_k^m$ est ainsi représenté par un jeu de coefficients $a_l^j$, chaque coefficient donnant la mesure de l'amplitude du signal reçu dans la cellule élémentaire (ou "pixel") (l, j) de la grille considérée. Cette mesure est évidemment dépendante de la taille de la cellule élémentaire ou, autrement dit, du pas de la grille. Par suite, pour déterminer la position précise d'un réflecteur, le procédé selon l'invention met en oeuvre un traitement permettant de déterminer les valeurs de coefficients $a_l^j$.

Selon l'invention, la détermination des coefficients $a_l^j$ est réalisée en projetant sur la grille le signal numérique $\left\{ x_k^m \right\}$ "idéalisé", c'est-à-dire débarrassé du bruit. Cette projection se traduit mathématiquement par le produit scalaire du signal numérique $\left\{ x_k^m \right\}$ "idéalisé" par la fonction d'échantillonnage $\left\{ g_k^m \left( l \cdot \delta\tau, j \cdot \delta\varphi \right) \right\}$ correspondant aux noeuds de la grille d'analyse. $\left\{ g_k^m \left( l \cdot \delta\tau, j \cdot \delta\varphi \right) \right\}$ est définie par la relation suivante:

$$g_k^m(\Delta\tau, \Delta\varphi) = \exp\left[-i2\pi \cdot P_m(k) \cdot \Delta f \cdot \Delta\tau\right] \cdot \exp\left[i2\pi \cdot (m \cdot K + k) \cdot T \cdot \Delta\varphi\right] \qquad [10]$$

avec $(\Delta\tau, \Delta\varphi) = (1 \cdot \delta\tau, j \cdot \delta\varphi)$ .

Par suite chaque coefficient $a_l^j$ est défini par la relation:

$$a_l^j = \sum_{k,m} x_k^m \cdot \left[ g_k^m \left( l \cdot \delta\tau, j \cdot \delta\varphi \right) \right]^* \qquad [11]$$

ou bien encore, en fonction des différents réflecteurs p considérés et des coefficients de pondération G, par la relation:

$$a_l^j = \sum_p a_p \cdot G\left( \Delta\tau_p - 1 \cdot \delta\tau, \Delta\varphi_p - j \cdot \delta\varphi \right); \qquad [12]$$

les coefficients G $(\Delta\tau_p - l \cdot \delta\tau, \Delta\varphi_p - j \cdot \delta\varphi)$ étant définis par:

$$G\left( \Delta\tau_p - 1 \cdot \delta\tau, \Delta\varphi_p - j \cdot \delta\varphi \right) = \sum_{k,m} g_k^m \left( \Delta\tau_p, \Delta\varphi_p \right) \cdot \left[ g_k^m \left( l \cdot \delta\tau, j \cdot \delta\varphi \right) \right]^* \qquad [13]$$

le symbole "*" représentant ici l'opérateur de conjugaison complexe.

La fonction G $(\Delta\tau_p - 1 \cdot \delta\tau, \Delta\varphi_p - j \cdot \delta\varphi)$ représente la pondération de la contribution du réflecteur p dans le signal reçu dans la porte distance considérée, matérialisée par l'amplitude $a_p$, vis-à-vis de l'amplitude du signal reçu dans la cellule élémentaire (1, j) considérée, amplitude représentée par le coefficient $a_l^j$.

Le module de la fonction de pondération G $(\Delta\tau, \Delta\varphi)$ peut être représenté, comme l'illustre la figure 5, dans un plan défini par deux axes Distance-Doppler, sous forme d'une surface 51 ondulée suivant ces deux axes. La surface 51 présente un pic central 52 d'amplitude maximale au point G (0, 0) = M·K, point qui correspond à la position exacte d'un réflecteur, ce pic étant entouré d'une plage ondulante d'amplitude plus faible mais non systématiquement nulle.

Par suite, pour un réflecteur p ayant une position par rapport au détecteur caractérisée par un retard temporel $\Delta\tau_p$, un décalage Doppler $\Delta\varphi_p$, et une amplitude $a_p$ pour la porte distance considérée, une amplitude $a_l^j$ maximale sera

obtenue pour une cellule élémentaire ($l_0$, $j_0$) si on vérifie: et

$$\begin{cases} l_0 = \Delta\tau_p \,/\, \delta\tau \\[2em] j_0 = \Delta\varphi_p \,/\, \delta\varphi \end{cases} \qquad\qquad [14]$$

si cette cellule existe, c'est-à-dire si $\Delta\tau_p$ et $\Delta\varphi_p$ sont proportionnels respectivement à $\delta\tau$ et $\delta\varphi$.

Inversement, 1 et j étant nécessairement des entiers relatifs, si la condition de proportionnalité précédente n'est pas vérifiée le signal présentera pour la cellule ($l_0$, $j_0$) considérée une amplitude atténuée par rapport à cette amplitude maximale.

Selon l'invention, le pas de quantification ($\delta\tau$, $\delta\varphi$), autrement dit le pas de la grille Distance- Doppler ou plus précisément la taille de la cellule élémentaire, est dimensionné de façon à préserver au mieux l'information contenue dans le signal. En pratique, les pas de quantification $\delta\tau$ et $\delta\varphi$ selon l'axe Distance et selon l'axe Doppler sont définis comme suit:

$$\begin{cases} \delta\tau = 1/(N \cdot \Delta f) = 1/B\,, \\[2em] \delta\varphi = 1/(M \cdot K \cdot T) \end{cases} \qquad\qquad [15]$$

où N est le nombre de valeurs que peut prendre la fonction $P_m$ (k), et où M.K est le nombre de valeurs que peut prendre m·K+k.

Ce choix pour les valeurs $\delta\tau$ et $\delta\varphi$ permet avantageusement de dimensionner la cellule élémentaire de telle sorte que la taille de cette cellule élémentaire coïncide avec la largeur du pic de la fonction G pour une amplitude de ce pic correspondant à une atténuation donnée par rapport à son amplitude max. On choisira, par exemple, une cellule dimensionnée pour coïncider avec la largeur du pic à -4dB. La grille représentée sur la figure 5 par l'ensemble des lignes en traits pleins 53 et 54, orientées respectivement selon l'axe distance et l'axe Doppler, illustre un tel choix.

Ainsi, dans le cas le plus défavorable où un réflecteur a une réponse localisée à la limite de la cellule élémentaire (correspondant à un décalage  maximum du pic dans la cellule élémentaire), sa contribution dans le signal est mesurée au centre de la cellule élémentaire avec une atténuation donnée par l'amplitude maximale du pic moins 4dB.

Par suite les incréments $\delta\tau$ et $\delta\varphi$ étant ainsi définis, le signal $\left\{ x_k^m \right\}$ peut être représenté, sous une forme entièrement discrétisée, par la relation suivante:

$$x_k^m = \sum_{l,j} a_l^j \cdot \exp\left[ -i2\pi \cdot P_m(k) \cdot 1/N \right] \cdot \exp\left[ i2\pi \cdot (m \cdot K + k) \cdot j/(M \cdot K) \right] + w_k^m \qquad [16]$$

La relation [16] montre que la représentation est N-périodique sur l'axe Distance 1 et M·K-périodique sur l'axe Doppler j. Par suite, le domaine de variation des indices 1 et j est défini comme un intervalle limité, une "bande de base" définie par:

1 $\in$ [0,N[ pour l'axe Distance,
j $\in$ [0, M.K[ pour l'axe Doppler.

et la grille d'analyse, la carte, couvre un domaine N.$\delta\tau$×M.K.$\delta\varphi$ par définition restreint à (1/$\Delta$f) × (1/T) (cf. relation [15] ) .

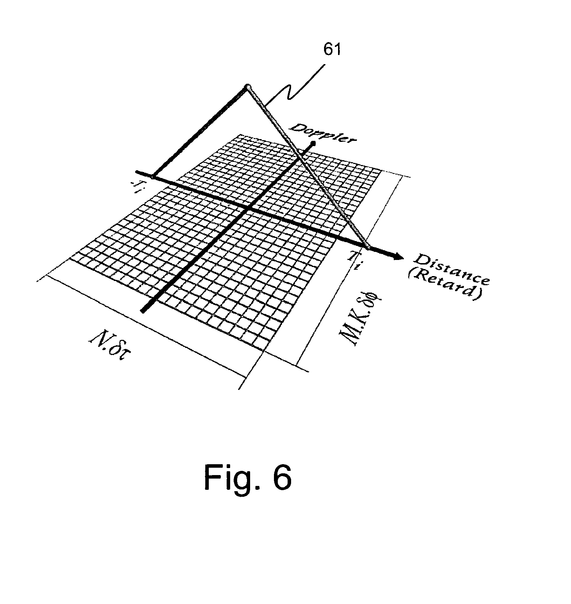

Lors de l'analyse d'une porte distance naturelle donnée par le procédé selon l'invention, la grille ainsi définie est centrée sur la porte distance naturelle analysée, comme illustré à la figure 6, sur laquelle la porte distance naturelle est matérialisée par la pondération triangulaire 61 du filtrage adapté.

Comme on peut le constater, la porte distance naturelle présentant une taille correspondant à 2·$T_i$, la carte doit couvrir au plus la largeur correspondante 2 · $T_i$ sur l'axe distance. Cette limitation permet avantageusement de déterminer un majorant du nombre N de fréquences considérées. On a ainsi:

$$N \cdot \delta\tau \le 2 \cdot T_i \quad \Rightarrow \quad N \le 2 \cdot T_i \cdot B \qquad [17]$$

Par ailleurs, l'analyse de la séquence temporelle des échantillons du signal permet de développer l'axe Doppler à l'intérieur de la porte distance. Le nombre total M·K des récurrences traitées doit être aussi grand que possible pour accroître la résolution. Cependant, des considérations opérationnelles imposent des valeurs limites à ce nombre de récurrences. Par suite, le traitement mis en oeuvre par le procédé selon l'invention recherche, pour chaque porte distance naturelle, les valeurs des N·M·K coefficients $a_l^j$ définissant le signal $\left\{x_k^m\right\}$, dans les limites mentionnées précédemment. La suite du texte décrit la façon dont, la forme d'onde mise en oeuvre étant celle décrite précédemment, le traitement détermine la valeur de ces coefficients.

Il est à noter que la connaissance des M·K échantillons $x_k^m$ du signal reçu pour chaque porte distance naturelle donne accès à M·K équations complexes. Or 1 pouvant prendre N valeurs comprises entre 0 et N-1 et j, M·K valeurs comprises entre 0 et M·K-1 , les équations définissant les échantillons de signal reçu comportent N·M·K coefficients $a_l^j$ dont la détermination conditionne la détermination des positions des différents réflecteurs. Par suite, même en l'absence de bruit thermique, ce problème ne trouve pas de solution directe.

C'est pourquoi le traitement selon l'invention met à profit le fait que par hypothèse, les points brillants étant en nombre limité, il est certain qu'un très grand nombre de coefficients $a_l^j$ sont nuls, bien qu'on ne sache pas lesquels sont effectivement nuls. Cette considération induit des conséquences statistiques avantageuses sur le signal $\left\{x_k^m\right\}$.

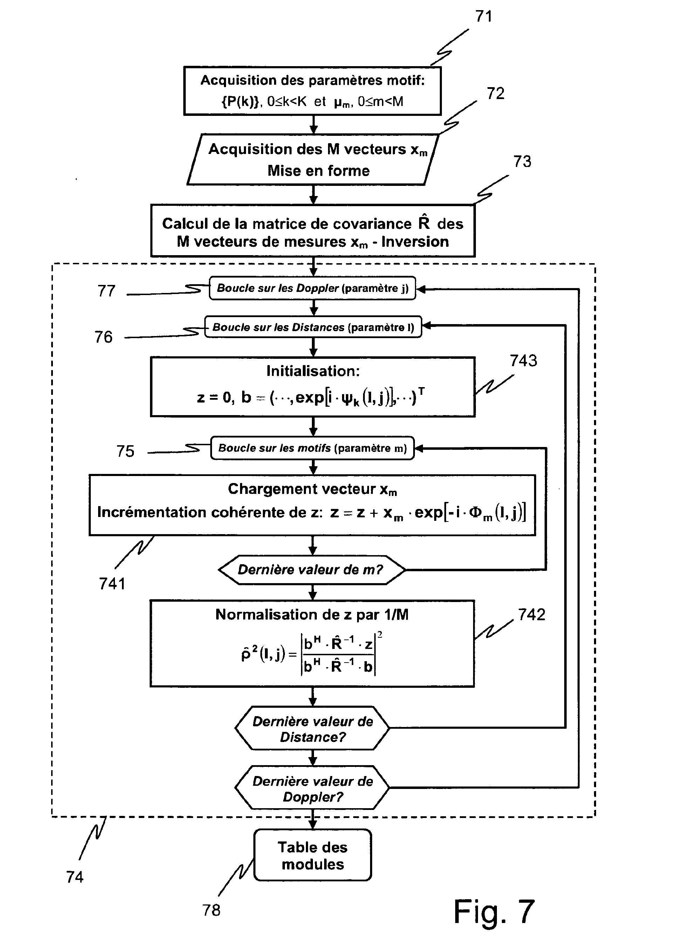

La figure 7 présente l'organigramme des opérations constituant le traitement appliqué au signal reçu par le procédé selon l'invention. Ce traitement est exécuté de manière séparée et répétitive pour chaque porte distance.

La première étape 71 du traitement consiste à acquérir pour le cycle de N récurrences considéré, les termes P(k) et $\mu_m$ définissant les $\mu$-motifs utilisés à l'émission pour générer la forme d'onde. Ces termes, déterminés à l'émission, sont ensuite mémorisés pour pouvoir être utilisés par le traitement.

La deuxième étape 72 du traitement mis en oeuvre par le procédé selon l'invention consiste quant à elle dans le conditionnement des K·M échantillons $x_k^m$ du signal reçu pour chaque porte distance naturelle. Le signal reçu est ici conditionné sous la forme de K vecteurs de mesure $x_m$ chaque vecteur ayant pour composantes les K échantillons ($x_0$ à $x_{K-1}$) correspondant au K récurrences d'un même $\mu$-motif m. On définit ainsi M vecteurs de la forme:

$$x_m = \left(x_0^m, x_1^m, \ldots, x_{K-l}^m\right)^T \qquad [18]$$

"T" représentant l'opérateur de transposition.

Par suite chaque vecteur de mesure $x_m$ peut avantageusement être représenté par la relation suivante:

$$x_m = \sum_{l,j} a_l^j \cdot g_m(l,j) + w_m \qquad [19]$$

dans laquelle $g_m(l,j)$ et $w_m$ sont des vecteurs construits suivant le même principe que $x_m$. Ainsi $g_m(l,j)$ est par exemple défini par la relation suivante:

$$g_m(l,j) = \left(\cdots, \exp\left[-i2\pi \cdot P_m(k) \cdot l/N\right] \cdot \exp\left[i2\pi \cdot (m \cdot K + k) \cdot j/(M \cdot K)\right], \cdots\right)^T$$

où "exp [- i2π·P$_m$ (k) ·1/N] ·exp [i2π· (m·K+k) ·j/ (M·K) ] " représente la k$^{ième}$ composante de g$_m$ (l, j) .

En outre, en considérant une cellule élémentaire particulière repérée par ses coordonnées (l$_0$,j$_0$) sur la grille d'analyse (i.e. la carte), un vecteur x$_m$ peut avantageusement être mis sous la forme suivante:

$$x_m = a_{l_0}^{j_0} \cdot g_m(l_0, j_0) + \sum_{(l,j) \neq (l_0, j_0)} a_l^j \cdot g_m(l, j) + w_m \qquad [20]$$

x$_m$ est ainsi représenté pour la cellule élémentaire considérée comme la somme d'un signal utile "$a_{l_0}^{j_0} \cdot g_m(l_0, j_0)$" pouvant provenir d'un réflecteur localisé dans la cellule élémentaire (l$_0$, j$_0$) considérée, d'un signal parasite "$\sum_{(l,j) \neq (l_0, j_0)} a_l^j \cdot g_m(l, j)$" pouvant provenir de la contribution de réflecteurs localisés dans les autres cellules élémentaires et de bruit thermique "w$_m$".

Il est à noter ici que, le signal V$_m$ correspondant à la somme du signal parasite "$\sum_{(l,j) \neq (l_0, j_0)} a_l^j \cdot g_m(l, j)$" et du bruit thermique "w$_m$" est un signal aléatoire dont on ne connait pas, a priori la nature (la statistique), excepté en ce qui concerne le terme w$_m$. Cependant, ce signal peut être modélisé, au second ordre, par un signal aléatoire gaussien, centré et de matrice de covariance Q.

La matrice de covariance Q, non accessible en tant que telle du fait du nombre d'inconnues, peut cependant avantageusement être estimée, de manière connue, à partir d'une moyenne temporelle, pour peu que les signaux vectoriels x$_m$ aient une covariance indépendante de m.

Dans le cadre du procédé selon l'invention cette condition de "stationnarité" est avantageusement remplie. En effet, celui-ci met en oeuvre des formes d'ondes remplissant la condition générale définie pour tout motif m, par la relation suivante:

$$\forall\, m: \quad P_m(k) - P_m(k') = S(k, k'), \qquad [21]$$

où S(k, k') représente une fonction quelconque de k et k' indépendante de m, cette indépendance caractérisant la stationnarité du signal.

La condition [21] est en particulier vérifiée pour des formes d'onde vérifiant la relation suivante:

$$P_m(k) = \mu_m + P(k) \qquad [22]$$

où P(k) représente une fonction indépendante de m.

Pour de telles formes d'ondes, la connaissance de tous les termes μ$_m$ (μ$_m$ = P$_m$ (0)) pour m ∈ [0,M[, et de tous les termes P(k) (P(k)= S(k,0) dans la relation [21]) définis indépendamment de m pour k ∈ [0,K[, permet avantageusement de définir la séquence complète des fréquences, P$_m$(k), mises en oeuvre pour les K récurrences d'un motif m.

La relation [21] définit ainsi les formes d'onde mise en oeuvre par le procédé selon l'invention. La relation [22] définit quant à elle les formes d'onde préférées de l'invention. Plus précisément, dans une forme préférée de réalisation, le procédé selon l'invention met en oeuvre, comme cela a été dit précédemment, des formes d'ondes pour lesquelles tous les nombres P (0), P (1), ..., P (K- 1), μ$_m$ sont des nombres entiers aléatoires, équi- répartis dans le domaine [0, N [, P (k) représentant un motif générique, ou micro motif.

Selon cette forme de réalisation préférée, les formes d'ondes préférées sont, par ailleurs, plus précisément définies, de manière à restreindre le domaine de variation des P$_m$(k) au segment [0,N[ et donc de restreindre le nombre des fréquences disponibles à l'émission à N, par la relation [4] qu'on rappelle ici:

$$P_m(k) \equiv (P(k) + \mu_m) \; [N] \qquad [4]$$

où la notation [N] désigne l'opération de congruence "modulo N".

Par suite, avec cette famille de formes d'onde, les vecteurs $g_m (l, j)$ peuvent avantageusement être définis par la relation suivante:

$$g_m(l, j) = s_m(l, j) \cdot b(l, j)$$

dans laquelle $s_m (l, j)$ est un terme de phase scalaire et $b (l, j)$ un termes de phase vectoriel, qui ont respectivement pour expression:

$$s_m(l, j) = \exp[i \cdot \Phi_m(l, j)] \qquad [23]$$

avec $\Phi_m (l, j) = 2\pi \cdot (m \cdot j/M - \mu_m \cdot 1/N)$, et

$$b(l, j) = (\cdots, \exp[i \cdot \Psi_k(l, j)], \cdots)^T \qquad [24]$$

avec $\Psi_k (l, j) = 2\pi \cdot [k \cdot j/ (M \cdot K) - P (k) \cdot 1/N]$

Par suite, un vecteur de mesure $x_m$ a pour expression:

$$x_m = a_{l_0}^{j_0} \cdot s_m(l_0, j_0) \cdot b(l_0, j_0) + v_m \qquad [25]$$

où $v_m$ représente, comme énoncé précédemment, un signal vectoriel aléatoire gaussien, centré et de matrice de covariance Q.

Il est à noter que, puisque le signal contient le bruit thermique (bruit blanc), aucune valeur propre de Q n'est nulle et donc la matrice est inversible.

La troisième étape 73 du traitement mis en oeuvre par le procédé selon l'invention consiste à réaliser une estimation $\hat{Q}$ de la matrice de covariance Q, estimation réalisée au travers de l'estimation $\hat{R}$ de la matrice de covariance R des M vecteurs de mesure $x_m$.

Il est en effet à noter que l'objet du traitement appliqué étant de caractériser la présence éventuelle d'un réflecteur dans une cellule d'analyse élémentaire donnée, seule la connaissance des coefficients $a_{l_0}^{j_0}$ est ici recherchée.

Cependant, les signaux $x_m$ étant défini par la relation [25], il est également nécessaire, pour déterminer $a_{l_0}^{j_0}$, de déterminer ou du moins d'estimer Q.

Selon l'invention, $v_m$ étant considéré comme gaussien, la fonction de densité de probabilité conjointe des mesures peut être explicitée pour réaliser une estimation optimale au sens du maximum de vraisemblance du coefficient $a_{l_0}^{j_0}$, cette estimation étant toujours possible du fait que la matrice Q est toujours inversible.

En pratique, on tire de cette fonction de densité de probabilité conjointe l'estimée $\hat{a}_{l_0}^{j_0}$ du coefficient $a_{l_0}^{j_0}$ qui peut être définie par la relation suivante:

$$\hat{a}_{l_0}^{j_0} = \frac{b^H(l_0, j_0) \cdot Q^{-1} \cdot z(l_0, j_0)}{b^H(l_0, j_0) \cdot Q^{-1} \cdot b(l_0, j_0)}; \qquad [26]$$

l'opérateur "H" correspondant à l'opération de transposition hermitienne.

Le terme $z(l_0, j_0)$ représente ici une intégration cohérente des mesures sur les $\mu$-motifs, définie par la relation suivante:

$$z(l_0, j_0) = \frac{1}{M} \sum_{m=0}^{M-1} s_m^*(l_0, j_0) \cdot x_m = \frac{1}{M} \sum_{m=0}^{M-1} x_m \exp - 2i\pi \cdot (m \cdot j / M - \mu_m \cdot l / N)$$

L'expression de l'estimation $\hat{a}_{l_0}^{j_0}$ du coefficient $a_{l_0}^{j_0}$ apparait ainsi comme dépendant de la valeur de la matrice Q ou plus exactement de la matrice inverse $Q^{-1}$. Or, l'utilisation de la fonction de densité de probabilité conjointe ne permet pas de déterminer l'estimée $\hat{Q}$ de la matrice Q, faute de pouvoir effectuer analytiquement les calculs du maximum de vraisemblance jusqu'au bout. C'est pourquoi, dans le cadre de l'invention, on substitue à l'estimée $\hat{Q}$ déterminée à partir de la fonction de densité de probabilité conjointe, une autre estimée, sans doute sous-optimale, mais accessible à partir de la matrice de covariance empirique $\hat{R}$ des mesures.

Selon ce mode d'estimation, non basé sur la probabilité conjointe, l'estimée $\hat{Q}$ est définie par la relation:

$$\hat{Q} = \hat{R} - \left|\hat{a}_{l_0}^{j_0}\right|^2 \cdot b(l_0, j_0) \cdot b^H(l_0, j_0) \qquad [27]$$

découlant de l'expression de la matrice de covariance empirique des mesures $\hat{R}$, définie par

$$\hat{R} = \frac{1}{M} \sum_{m=0}^{M-1} x_m \cdot x_m^H , \qquad [28]$$

les vecteurs de mesure $x_m$ étant définis par la relation [25].

Par suite, l'inverse de la matrice $\hat{Q}$, estimée de Q, peut être explicitée, de sorte que l'on dispose d'un système des deux équations à deux inconnues définissant les estimées, ce système étant décrit par les relations suivantes:

$$\begin{cases} \hat{a}_{l_0}^{j_0} = \dfrac{b^H(l_0, j_0) \cdot Q^{-1} \cdot z(l_0, j_0)}{b^H(l_0, j_0) \cdot Q^{-1} \cdot b(l_0, j_0)} \\[2em] \hat{Q}^{-1} = \hat{R}^{-1} + \dfrac{\left|\hat{a}_{l_0}^{j_0}\right|^2}{1 - \left|\hat{a}_{l_0}^{j_0}\right|^2 \cdot b^H(l_0, j_0) \cdot \hat{R}^{-1} \cdot b(l_0, j_0)} \hat{R}^{-1} \cdot b(l_0, j_0) \cdot b^H(l_0, j_0) \cdot \hat{R}^{-1} \end{cases} \qquad [29]$$

L'élimination de $\hat{Q}^{-1}$ entre ces deux équations fournit l'estimation recherchée de $\hat{\rho}^2(l_0, j_0) = \left|\hat{a}_{l_0}^{j_0}\right|^2$ (cf. équation [30]).

Ainsi, l'objet de la troisième étape 73 du traitement mis en oeuvre par le procédé selon l'invention consiste principalement à réaliser le calcul de la matrice de covariance estimée $\hat{R}$ des M vecteurs $x_m$, matrice de dimension K·K.

Cependant, bien qu'en raison de la présence du bruit thermique, la matrice de covariance R n'ait aucune valeur propre nulle et qu'elle soit donc théoriquement inversible, son estimée $\hat{R}$ peut s'avérer numériquement très proche de la singularité. Dans un tel cas le calcul de l'expression du module $\hat{\rho}^2(l_0, j_0)$ serait pris en défaut. C'est pourquoi, pour se prémunir contre cette éventualité, le traitement mis en oeuvre au cours de l'étape 73 peut également comporter, dans une forme préférée, une opération de "chargement de la diagonale" de la matrice, consistant à ajouter aux éléments diagonaux de la matrice $\hat{R}$ des quantités (aléatoires) réelles positives (puisque la matrice est hermitienne) petites devant la plus grande valeur propre.

La quatrième étape 74 du traitement mis en oeuvre par le procédé selon l'invention consiste à utiliser la matrice de covariance empirique $\hat{R}$ des mesures, calculée à l'étape précédente, pour résoudre, pour chaque cellule d'analyse (l,j), le système [29] et réaliser l'opération proprement dite de caractérisation de la présence d'un réflecteur.

Dans un premier mode de réalisation du procédé selon l'invention, l'opération réalisée par le traitement consiste à calculer, pour chaque cellule (l,j), le module $\hat{\rho}(l,j) = \left| a_i^j \right|$ du coefficient $a_i^j$ ou, plus précisément, le carré $\hat{\rho}^2(l,j)$ de ce module défini par la relation suivante:

$$\hat{\rho}^2(l_0, j_0) = \left| \frac{b^H(l_0, j_0) \cdot \hat{R}^{-1} \cdot z(l_0, j_0)}{b^H(l_0, j_0) \cdot \hat{R}^{-1} \cdot b(l_0, j_0)} \right|^2 \qquad [30]$$

Le terme $\hat{\rho}^2(l_0, j_0)$ ainsi calculé représente une estimation de l'énergie reçue provenant d'un réflecteur localisé dans la cellule élémentaire considérée ($l_0, j_0$).

Un balayage suivant les indices 1 et j permet de générer la carte complète associée à la porte distance naturelle dans laquelle a été prélevé le signal.

Dans cette première forme de réalisation, le traitement selon l'invention permet ainsi de disposer pour chaque cellule d'analyse (l,j) du niveau de signal reçu et de former ainsi pour chaque porte distance naturelle, une table des estimations du niveau de signal reçu. Ces estimations peuvent ainsi être transmises sous cette forme à un traitement ultérieur pouvant les exploiter de manière diverse.

D'un point de vue pratique, la quatrième étape 74 du traitement mis en oeuvre par le procédé selon l'invention considère et traite les cellules d'analyse élémentaires l'une après l'autre.

A cet effet elle exécute, pour l'ensemble des μ-motifs, une opération itérative 741 consistant, à chaque itération à considérer un μ-motif particulier, et à prendre en compte (à "charger") le vecteur de mesure $x_m$ et à réaliser pour la cellule d'analyse élémentaire (l,j) considérée, le calcul incrémental permettant de déterminer le vecteur z(l,j) correspondant à l'intégration cohérente des vecteurs de mesures $x_m$ sur l'ensemble des μ-motifs, ce calcul étant défini par la relation suivante:

$$z = z + x_m \cdot \exp[-i \cdot \Phi_m(l,j)] \qquad [31]$$

Chaque itération est terminée par un test permettant de déterminer si l'ensemble des M μ-motifs a été pris en compte et de relancer une itération si tel n'est pas le cas.

Ainsi, à l'issue des M itérations correspondant à l'exploitation des M vecteurs de mesures $x_m$ l'opération 741 délivre la valeur finale du vecteur z (l, j) pour la cellule d'analyse élémentaire (l, j) considérée.

Selon l'invention l'exécution des M itérations de l'opération 741 est précédée par l'exécution d'une opération 743 d'initialisation consistant à mettre à 0 le vecteur des mesures z et à calculer le vecteur b(l,j) des termes de phase correspondant à la cellule d'analyse considérée.

Elle est par ailleurs suivie par l'exécution d'une opération 742 de calcul de la valeur du module $\hat{\rho}^2(l,j)$ correspondant à la cellule élémentaire (l,j) considérée.

Selon l'invention les opérations 742 et 743, ainsi que les M itérations d'exécution de l'opération 741 sont répétées pour chacune des cellules d'analyses élémentaires (l,j), en considérant toutes les valeurs possibles de Doppler et, pour chaque valeur de Doppler, toutes les valeurs possibles de distance, compte tenu du pas de la grille d'analyse. Autrement dit on considère, toutes les valeurs du paramètre j et, pour chaque valeur de j, toutes les valeurs du paramètre 1.

Par suite, comme l'illustre la figure 7, l'étape 74 du traitement comporte trois boucles de calcul imbriquées, une boucle de premier niveau 75 portant sur les valeurs de m, une boucle de deuxième niveau 76 portant sur les valeurs de 1 et une boucle de troisième niveau 77 portant sur les valeurs de j.

La boucle de premier niveau 75 met en oeuvre M fois l'opération 741.

La boucle de second niveau 76 exécute quant à elle, pour chacune des cellules d'analyse correspondant à une même valeur du Doppler, l'opération d'initialisation 743. Elle lance ensuite l'exécution de la boucle de premier niveau 75, puis l'exécution de l'opération 742 de calcul de $\hat{\rho}^2(l,j)$.

La boucle de troisième niveau 77, enfin, gère l'ensemble des valeurs de Doppler possibles et lance l'exécution de la boucle de deuxième niveau 76 pour chaque valeur du Doppler.

On obtient ainsi comme l'illustre la figure 7, une carte qui se présente sous la forme d'une table 78 définissant les valeurs des modules $\hat{\rho}^2(l,j)$ pour chacune des cellules élémentaires de taille $(\delta\tau, \delta\varphi)$ de la porte distance naturelle considérée.

Ainsi dans son premier mode de réalisation, le procédé selon l'invention permet avantageusement d'obtenir pour chaque porte distance naturelle prise séparément, une estimation fine en distance et en Doppler du niveau (i.e. de la puissance) de signal reçu en provenance d'un réflecteur localisé dans la cellule d'analyse élémentaire (l,j) considérée, cette estimation étant débarrassée de la contribution des signaux parasites. Cependant, Il existe beaucoup d'applications qui ne nécessitent pas de connaitre l'estimation de l'énergie reçue dans chaque cellule élémentaire. L'information recherchée, de nature binaire, peut parfois se réduire dans certains cas à déterminer s'il y a ou non présence d'un point brillant, dans la cellule d'analyse considérée, c'est-à-dire d'un réflecteur localisé à la distance considéré et présentant un Doppler donné.

Par suite dans une deuxième mode de réalisation, le traitement implémenté par le procédé selon l'invention consiste alors à permettre de catégoriser la cellule considérée en considérant que le signal reçu peut être modélisé par deux formes distinctes possibles suivant les hypothèses $H_1$ et $H_0$ de présence ou non d'un point brillant (i.e. d'un réflecteur):

- Hypothèse $H_0$: absence de point brillant (I.e. absence de réflecteur). $x_m$ correspond alors seulement à un signal parasite:

$$x_m = v_m \qquad\qquad [32]$$

- Hypothèse $H_1$: présence d'un point brillant (I.e. présence d'un réflecteur). $x_m$ correspondant alors à un signal utile associé à une signal parasite:

$$x_m = a_{l_0}^{j_0} \cdot s_m(l_0, j_0) \cdot b(l_0, j_0) + v_m$$

Le traitement réalisé par le procédé selon l'invention a alors pour objet de déterminer, à partir des mesures disponibles, laquelle des hypothèses $H_1$ ou $H_0$ est la bonne.

Selon l'invention, la détermination est réalisée en considérant le critère de NEYMAN-PEARSON. Ce critère est jugé optimal au sens où il assure une probabilité de détection maximale tout en maintenant le taux de fausse alarme inférieur à une valeur donnée. Il conduit à un test basé sur le rapport de vraisemblance, de la forme:

$$L(x) = \frac{p_1(x)}{p_0(x)} \quad \begin{cases} \text{si } L(x) \geq C: & H_1 \text{ est vérifiée} \\ \text{si } L(x) < C: & H_0 \text{ est vérifiée} \end{cases} \qquad [33]$$

où $p_1(x)$ représente la densité de probabilité conjointe des mesures sous l'hypothèse $H_1$ et $p_0(x)$ celle sous l'hypothèse $H_0$. C représente ici un seuil qui s'exprime en fonction de la probabilité de fausse alarme fixée, et qu'il faut déterminer.

Dans le contexte de l'invention et après développement des calculs en reprenant les notations utilisées précédemment, le test considéré, qui a la qualité d'être "uniformément plus puissant", peut être formulé de la façon suivante:

$$\left| b^H(l_0, j_0) \cdot Q^{-1} \cdot z(l_0, j_0) \right|^2 \quad \begin{cases} \text{si } \geq C: & H_1 \text{ est vérifiée} \\ \text{si } < C: & H_0 \text{ est vérifiée} \end{cases} \qquad [34]$$

Le calcul de C s'appuie quant à lui sur la définition de la probabilité de fausse alarme, notée $P_{fa}$, qui est la probabilité d'être supérieur à C sous l'hypothèse $H_0$ :

$$P_{fa} = \underset{H_0}{Prob}\left[ \left| b^H(l_0, j_0).Q^{-1}.z(l_0, j_0) \right|^2 \geq C \right] \qquad [35]$$

Par suite, sachant que sous l'hypothèse $H_0$ les mesures son modélisées par $x_m = v_m$ et connaissant la nature statistique gaussienne des vecteurs $v_m$, cette probabilité $P_{fa}$ peut être explicitée pour en déduire l'inconnue C :

$$C = -b^H(l_0, j_0) \cdot Q^{-1} \cdot b(l_0, j_0) \cdot Log(P_{fa})/M \qquad [36]$$

Le test effectué prend alors la forme suivante:

$$\frac{\left| b^H(l_0, j_0) \cdot Q^{-1} \cdot z(l_0, j_0) \right|^2}{b^H(l_0, j_0) \cdot Q^{-1} \cdot b(l_0, j_0)} \begin{cases} si \geq -Log(P_{fa})/M : & H_1 \text{ est vérifiée} \\ si < -Log(P_{fa})/M : & H_0 \text{ est vérifiée} \end{cases}, \qquad [37]$$

forme qui n'est pas directement exploitable car la matrice de covariance Q n'est pas accessible. Cependant, comme précédemment on remplace Q par son estimée $\hat{Q}$ définie en fonction de la matrice de covariance empirique $\hat{R}$ des mesures (qui elle est accessible) et dont l'inverse est défini comme précédemment (cf. [29]) par:

$$\hat{Q}^{-1} = \hat{R}^{-1} + \frac{\left| \hat{a}_{l_0}^{j_0} \right|^2}{1 - \left| \hat{a}_{l_0}^{j_0} \right|^2 \cdot b^H(l_0, j_0) \cdot \hat{R}^{-1} \cdot b(l_0, j_0)} \hat{R}^{-1} \cdot b(l_0, j_0) \cdot b^H(l_0, j_0) \cdot \hat{R}^{-1} \qquad [38]$$

Le test théorique [37] peut alors être remplacé par le test opérationnel défini par:

$$\gamma(l, j) = \frac{\left| b^H(l_0, j_0) \cdot \hat{R}^{-1} \cdot z(l_0, j_0) \right|^2}{b^H(l_0, j_0) \cdot \hat{R}^{-1} \cdot b(l_0, j_0)} \begin{cases} si \ \gamma \geq -Log(P_{fa})/M : & H_1 \text{ est vérifiée} \\ si \ \gamma < -Log(P_{fa})/M : & H_0 \text{ est vérifiée} \end{cases} \qquad [39]$$

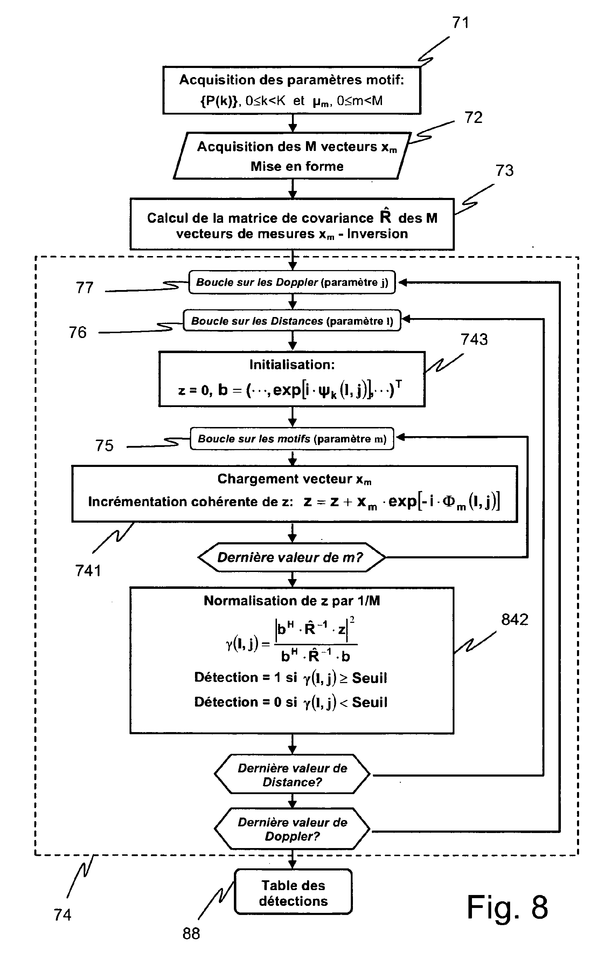

Ainsi, dans ce second mode de réalisation du procédé selon l'invention, l'étape 74 du traitement consiste à mettre en oeuvre non plus l'opération 742 consistant à calculer $\hat{\rho}^2$ (l, j), mais une opération 842 consistant à calculer le terme $\gamma$ (l, j) et à comparer la valeur obtenue pour chaque cellule d'analyse (l, j) à S=- Log ($P_{fa}$) /M, comme l'illustre l'organigramme de la figure 8; le reste de l'étape 74 restant par ailleurs inchangé.

On obtient alors une carte qui se présente sous la forme d'une table 88 définissant chacune des cellules élémentaires de taille ($\delta\tau$, $\delta\varphi$) de la porte distance considérée par un critère dont la valeur, 1 ou 0 par exemple, indique seulement la présence d'un réflecteur ou non.

Il est à noter qu'à cause d'une normalisation différente au dénominateur, la quantité $\gamma(l_0, j_0)$ testée par le traitement dans ce second mode de réalisation du procédé selon l'invention, ne correspond pas exactement à l'estimée $\hat{\rho}^2$ ($l_0, j_0$) du problème précédent. Cependant, la similitude des numérateurs indique que le traitement de décision relève du même procédé de projection que celui utilisé par le traitement d'estimation du premier mode de réalisation.

Les deux modes de réalisation du procédé selon l'invention décrits dans le texte qui précède, peuvent avantageusement être combinés, l'opération de détection 842 du traitement implémenté dans le second mode de réalisation pouvant être associé à l'opération d'estimation 742 du traitement implémenté dans le premier mode, de façon à réaliser un nettoyage de fond de carte, dont le principe est de multiplier cellule à cellule la table des niveaux de signal 78 par la table binaire 88 de façon à mettre à 0 les cellules pour lesquelles il n'y a pas eu détection ($\gamma$ (l, j) <S) et à ne conserver que les estimations des cellules pour lesquelles une détection a été réalisée ($\gamma$ (l, j) $\geq$S) .

Comme cela a été dit précédemment, le procédé selon l'invention tel que décrit est appliqué à un certain nombre de portes distance naturelles suivant l'étendue de l'objet à observer. Par suite l'espace observé se présente sous la forme d'une juxtaposition de cartes unitaires à haute résolution chaque carte correspondant à une porte distance. Généralement, de façon à limiter le nombre de portes distance à considérer l'espace observé est divisé en cartes juxtaposées. Cependant, cette manière de procéder quoique avantageuse dans le cas d'objets (de réflecteurs) d'étendues restreintes, couverts par une seule porte distance, nécessite, dans le cas d'objets plus étendus, de prendre en compte plusieurs portes distance simultanément, une carte unique ne couvrant qu'une faible partie de l'objet. Assembler judicieusement différentes cartes pour reconstituer l'objet complet offre alors un intérêt opérationnel évident.

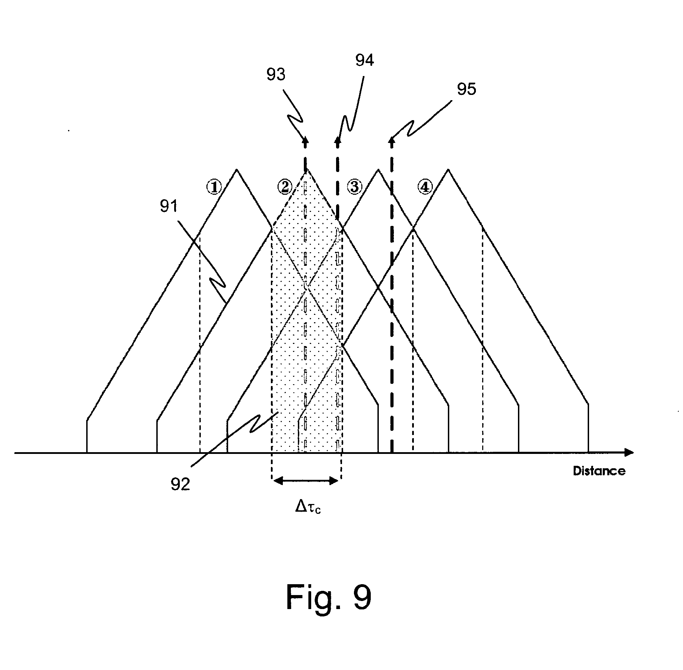

Or, compte tenu de la pondération triangulaire induite par le filtrage adapté lors de la formation des portes distance, les points brillants subissent une atténuation d'autant plus forte qu'ils sont plus décentrés dans la porte. C'est pourquoi l'assemblage des cartes ne peut pas être effectué par une simple juxtaposition des cartes produites, sous peine d'introduire une modulation d'amplitude extrêmement préjudiciable à une exploitation ultérieure de la carte composite globale regroupant toutes les portes distance analysées. Par suite, le procédé mis en oeuvre consiste alors non pas à considérer des portes distance juxtaposées mais des portes distance 91 présentant un recouvrement, tel que l'illustre la figure 9. Ces portes distance sont obtenues en adaptant l'implémentation du filtre adapté de manière appropriée.

Ainsi, en restreignant à sa seule partie centrale 92 la contribution de chaque porte naturelle 91 à la constitution d'une carte globale, ou plus précisément la contribution de chaque carte haute résolution associée, on ne retient en effet que les échos les moins atténués.

Selon l'invention, la largeur $\Delta\tau_C$ de cette partie centrale 92 est choisie en fonction de l'atténuation $\alpha$ maximale tolérée, suivant la relation:

$$\Delta\tau_C = 2 \cdot T_i \cdot (1 - \alpha) \qquad \alpha \in \left]0,1\right[ \qquad\qquad [40]$$

Par suite, le recouvrement est obtenu lors de l'application du filtre adapté, en imposant le pas $\Delta\tau_C$ à la formation des portes distance naturelles.

Ainsi, comme l'illustre l'exemple de la figure 9, les échos 93 et 94 sont cartographiés lors du traitement de la porte distance naturelle 2, tandis que l'écho 95 l'est lors du traitement de la porte distance naturelle 3.

Ainsi grâce à cet agencement particulier des portes distance, l'ensemble des points brillants est avantageusement bien mieux rendu dans la carte composite finale que dans chaque carte unitaire 1, 2, 3 ou 4.

Il est à noter que ce phénomène de juxtaposition n'a pas d'incidence sur l'axe Doppler, car la bande restituée par la carte est commune à toutes les portes distance naturelles. L'assemblage des cartes (des tables) n'est à opérer que suivant l'axe distance.

Dans le cas des deux premiers modes de réalisation du procédé selon l'invention décrits précédemment, la taille maximale d'une cellule est donnée par le pas d'échantillonnage $(\delta\tau, \delta\varphi)$ de la grille d'analyse de la porte distance, pas défini de façon à obtenir la résolution souhaitée. Par suite, le pas d'échantillonnage du signal est défini de manière précise.

En pratique, comme cela a été dit précédemment, les pas de quantification $\delta\tau$ et $\delta\varphi$ selon l'axe Distance et selon l'axe Doppler sont définis comme suit (cf. relation [15]):

$$\begin{cases} \delta\tau = 1/(N \cdot \Delta f) = 1/B \,, \\[2em] \delta\varphi = 1/(M \cdot K \cdot T) \end{cases}$$

où N est le nombre de valeurs que peut prendre la fonction $P_m(k)$, et où M·K est le nombre total d'impulsions émises.

Cependant, Il convient de distinguer les notions de résolution et d'échantillonnage.

On rappelle ici que la résolution correspond au pouvoir séparateur offert par le traitement. Elle est caractérisée par les dimensions du pic de la réponse impulsionnelle à un point brillant (i.e. à l'origine d'un signal de forte puissance), comptées généralement à -4dB du sommet (cf. figure 5). Elle représente la finesse ultime avec laquelle le traitement mis en oeuvre peut restituer l'environnement observé. Dans notre cas la résolution est $\delta\tau = 1/B$ en distance et $\delta\varphi = 1/(M \cdot K \cdot T)$ en Doppler.

Par suite, compte tenu d'une résolution donnée, la question se pose de l'échantillonnage optimal du signal reçu dans une porte distance. Autrement dit, en se figurant l'espace restitué comme une surface ondulée, comme illustré par la figure 5 (qui représente le cas idéal où la position du réflecteur considéré correspond au centre d'une cellule d'analyse), de laquelle jaillissent quelques pics d'amplitudes différentes (les points brillants), la question qui se pose est de savoir comment prélever l'information juste nécessaire pour rendre compte au mieux de cette surface et de ses reliefs; ou en d'autres termes comment échantillonner la surface. En effet un échantillonnage trop lâche, à partir de cellules élémentaires trop larges, risque de ne pas restituer certains pics, tandis qu'un échantillonnage trop serré entraîne des calculs inutilement volumineux, la plupart des calculs étant alors effectués sur du bruit.

Selon l'invention, l'échantillonnage du signal reçu (de la surface 51) est préférentiellement réalisé de façon à échantillonner celui-ci aux centres de cellules juxtaposées dont la taille est précisément égale à la résolution. Ce choix est motivé d'une part pour le besoin de contrôler l'atténuation de restitution d'un points brillants dont la position ne correspond pas exactement au centre d'une cellule d'analyse, et d'autre part par le besoin de s'affranchir de l'opérateur de congruence modulo N introduit dans le terme de phase relatif au retard par la fonction $P_m(k)$. Cette fonction s'écrit en effet:

$$P_m(k) = (P(k) + \mu_m)_{[N]} = P(k) + \mu_m + \eta_k^m \cdot N \qquad \eta_k^m : \text{entier relatif} \qquad [41]$$

ce qui permet de mettre le terme de phase relatif au retard sous la forme:

$$\Phi_R = -2\pi \cdot P_m(k) \cdot 1/N = -2\pi \cdot [P(k) + \mu_m] \cdot 1/N - 2\pi \cdot 1 \cdot \eta_k^m \qquad [42]$$

d'où l'on déduit:

$$\exp(i\Phi_R) = \exp\{-i2\pi \cdot [P(k) + \mu_m] \cdot 1/N\} \cdot \exp(-i2\pi \cdot 1 \cdot \eta_k^m) \qquad [43]$$

Or, 1 et $\eta_k^m$ étant des entiers, nous avons $\exp(-i2\pi \cdot 1 \cdot \eta_k^m) = 1$ ce qui fait disparaître l'effet de l'opérateur modulo dans le terme de phase. On a ainsi:

$$\exp(i\Phi_R) = \exp\{-i2\pi \cdot [P(k) + \mu_m] \cdot 1/N\} \qquad [45]$$

Par suite si le pas d'échantillonnage en distance est modifié, en particulier s'il est diminué (suréchantillonnage) le traitement du terme de phase doit subir une modification notable et devient difficile à implémenter. Toutefois, dans un mode de réalisation particulier, le procédé selon l'invention permet d'exécuter un doublement de l'échantillonnage à taille de cellules constante, associé à un chevauchement moitié des cellules d'analyse. Dans un tel mode opératoire, l'indice 1 caractérisant la distance de la cellule considérée dont dépend le terme de phase n'est plus entier. Cependant 1 n'est pas défini de manière quelconque et peut se mettre sous la forme fractionnaire suivante:

$$1 = 1'/2 \qquad \text{avec } 1' \in [0, 2 \cdot N[ \qquad [46]$$

Par suite, le terme de phase peut être exprimé par la relation suivante:

$$\exp(i\Phi_R) = \exp\{-i2\pi \cdot [P(k) + \mu_m] \cdot 1'/(2 \cdot N)\} \cdot \exp(-i\pi \cdot 1' \cdot \eta_k^m), \qquad [47]$$

de sorte que le facteur noté $\varepsilon_k^m(l')$ généré par l'opérateur modulo n'est plus constant mais peut prendre deux valeurs alternatives:

$$\varepsilon_k^m(l') = \exp\left(-i\pi \cdot l' \cdot \eta_k^m\right) = \begin{cases} +1 & \text{si l'un des facteurs l' ou } \eta_k^m \text{ est pair} \\ -1 & \text{si les deux facteurs l' et } \eta_k^m \text{ sont impairs} \end{cases} \qquad [48]$$

Par suite un échantillon de signal reçu est défini par la relation suivante (en notant 1 l'indice distance sur-échantillonnée):

$$x_k^m = \sum_{l,j} a_l^j \cdot \varepsilon_k^m(l) \cdot \exp\left\{-i2\pi \cdot [P(k) + \mu_m] \cdot 1/(2 \cdot N)\right\} \cdot \exp[i2\pi \cdot (m \cdot K + k) \cdot j/(M \cdot K)] + w_k^m$$

[49].

ou encore, en reprenant la définition des fonctions $g_k^m(\cdot;\cdot)$ avec ici $P_m(k) = P(k) + \mu_m$ :

$$x_k^m = \sum_{l,j} a_l^j \cdot \varepsilon_k^m(l) \cdot g_k^m\left[(1/2) \cdot \delta\tau, j \cdot \delta\varphi\right] + w_k^m \qquad [50]$$

Ainsi, en considérant une cellule d'analyse particulière, la cellule courante $(l_0, j_0)$, la relation précédente peut encore s'écrire:

$$x_k^m = \varepsilon_k^m(l_0) \cdot a_{l_0}^{j_0} \cdot g_k^m\left[(l_0/2) \cdot \delta\tau, j_0 \cdot \delta\varphi\right] + v_k^m \qquad [51]$$

où le terme $v_k^m$ regroupe le signal parasite déjà évoqué, qui correspond à des signaux provenant de réflecteurs situés dans d'autres cellules (Distance, Doppler), et le bruit thermique.

Par suite, pour traiter selon l'invention le signal correspondant à ce cas particulier de sur-échantillonnage, il est seulement nécessaire de distinguer deux familles d'échantillons: une pour les valeurs paires de $l_0$ et une pour les valeurs impaires. On définit alors un nouveau signal tabulé à double entrée défini par:

$$\left. \begin{array}{l} y_k^m[0] = x_k^m \\[2mm] \text{et} \\[2mm] y_k^m[1] = \begin{cases} x_k^m & \text{si } \eta \text{ est pair} \\ -x_k^m & \text{si } \eta \text{ est impair} \end{cases} \end{array} \right\} \qquad [52]$$

Cette construction est possible car on dispose de tous les éléments pour calculer $\eta$. Son intérêt vient du fait qu'en traitant le signal $y_k^m[0]$ lorsque $l_0$ est pair et $y_k^m[1]$ lorsqu'il est impair, le modèle précédent s'écrit de façon identique dans les deux cas:

$$y_k^m[\cdot] = a_{l_0}^{j_0} \cdot g_k^m[(l_0 / 2) \cdot \delta\tau, j_0 \cdot \delta\varphi] + v_k^m \qquad [53]$$

soit encore, vectoriellement en introduisant les mesures $y_m[\cdot] = \left(y_0^m[\cdot], y_1^m[\cdot], \ldots, y_{K-1}^m[\cdot]\right)^T$ :

$$y_m[\cdot] = a_{l_0}^{j_0} \cdot s_m(l_0, j_0) \cdot b(l_0, j_0) + v_m \qquad [54]$$

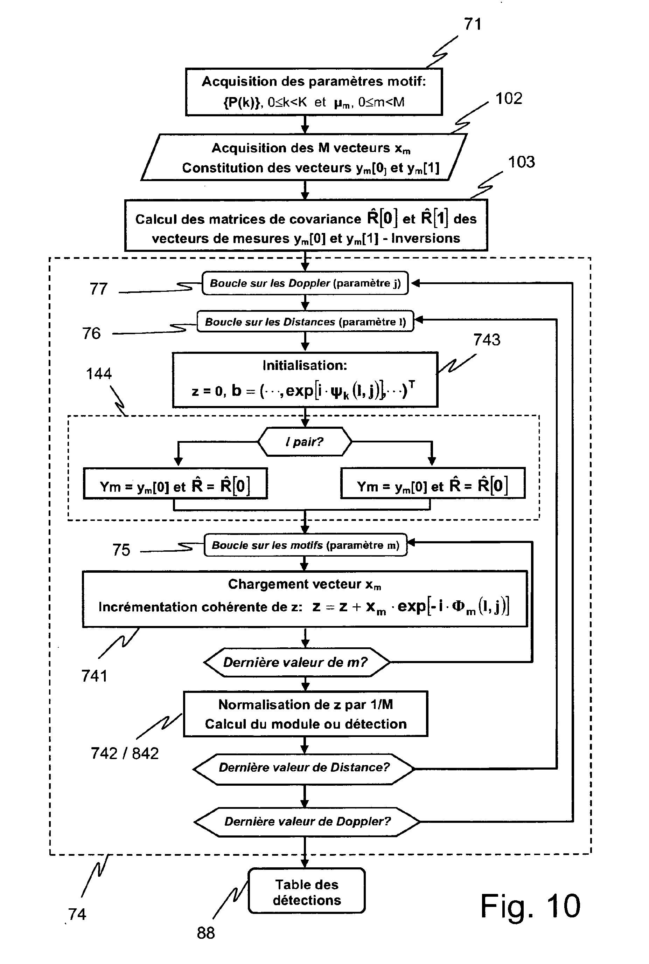

Par suite, le modèle de vecteur de mesure utilisé a une structure strictement identique au vecteur $x_m$ auquel est appliqué le traitement implémenté par le procédé selon l'invention dans les deux modes décrits précédemment. Le traitement décrit précédemment s'applique donc avantageusement à ce cas de suréchantillonnage, moyennant une adaptation permettant de travailler sur un double jeu de vecteurs de mesures $y_m[0]$ et $y_m[1]$ pour chacun desquels il faut calculer les matrices de covariance $\hat{R}[0]$ et $\hat{R}[1]$ et les inverser. Le traitement ainsi adapté peut être décrit par l'organigramme de la figure 10.

Comme on peut le constater sur la figure, le traitement mis en oeuvre dans ce mode de réalisation particulier présente, par rapport aux modes de réalisation précédents:

- une étape 102 d'acquisition des vecteurs de mesures $x_m$ et de constitution des vecteurs $y_m[0]$ et $y_m[1]$; cette étape se substituant à l'étape 72 des modes de réalisation des figures 7 et 8;
- une étape 103 de calcul des matrices de covariance estimées $\hat{R}[0]$ et $\hat{R}[1]$ des vecteurs de mesure $y_m[0]$ et $y_m[1]$; cette étape se substituant à l'étape 73 des modes de réalisation des figures 7 et 8.
- une opération 144 qui prend place dans l'étape 74 dans la boucle de niveau 2 (boucle sur les distances) avant l'exécution de la boucle 76 de niveau 1 (boucle sur les $\mu$-motif) et dont l'objet est de déterminer pour chaque valeur du paramètre 1, si celui-ci est pair ou impair et si on considère $y_m[0]$ et $\hat{R}[0]$ ou $y_m[1]$ et $\hat{R}[1]$.

Le reste des étapes de traitement reste par ailleurs inchangé.

Il est à noter que, comme l'illustre la figure 11, la contrainte de distinction de valeurs paires et impaires du paramètre 1 ne trouve pas d'équivalent en ce qui concerne le paramètre Doppler j, de sorte que la boucle 77 de niveau 3 n'est pas affectée. En effet l'exploration de l'axe Doppler ne met pas en jeu d'opérateur de congruence. Un suréchantillonnage sur cet axe ne pose donc aucun problème particulier, hormis le volume de calculs accru.

Il est à noter en outre que ce mode de réalisation particulier, décrit ici pour un échantillonnage double de chaque porte distance, peut être généralisé de manière analogue à un sur-échantillonnage d'un facteur entier supérieur à 2, au prix toutefois d'une complexification algorithmique importante.

## Revendications

**1.** Procédé pour réaliser une analyse haute résolution en distance et en Doppler des signaux radioélectriques reçus en provenance d'une zone de l'espace donnée, les signaux reçus étant analysés en bande de base, après application d'un filtrage adapté, au travers de portes distance, dites naturelles, définies par la largeur de la réponse du filtre adapté appliqué, **caractérisé en ce qu'**il comporte:

- l'émission d'une forme d'onde particulière comportant M paquets de K impulsions, appelés motifs, de durée $T_i$, émise avec une période de récurrence T, les fréquences des K impulsions étant déterminées dans une bande de fréquence allouée B donnée, les fréquences des impulsions formant un même motif m étant définies dans la bande B, pour deux récurrences quelconques k et k' par la relation:

$$P_m(k) - P_m(k') = S(k, k')$$

où S(k, k') représente une fonction quelconque de k et k' indépendante de m, $P_m(k)$ représentant une réalisation de tirages aléatoires tous différents des fréquences émises pour les K récurrences du motif m;

- la réception du signal provenant de la zone de l'espace considérée et l'échantillonnage du signal reçu pour chacune des portes distance naturelles, de largeur $2T_i$, le signal étant échantillonné en retard et en Doppler suivant un pas d'échantillonnage ($\delta\tau$, $\delta\varphi$) défini par la relation:

$$\begin{cases} \delta\tau = 1/(N \cdot \Delta f) = 1/B \, , \\[2em] \delta\varphi = 1/(M \cdot K \cdot T) \end{cases}$$

où N est le nombre de valeurs que peut prendre la fonction $P_m$ (k), c'est à dire le nombre de fréquences allouées, et où M·K est le nombre total d'impulsions émises;

la porte distance naturelle étant ainsi découpée en cellules d'analyse élémentaires, chaque cellule élémentaire étant repérée par les paramètres 1 et j caractérisant sa position en distance et en Doppler dans l'espace d'échantillonnage de la porte distance naturelle;

- le traitement du signal reçu pour une porte distance donnée, ce traitement comportant:

 - la mise en forme des échantillons de signal reçu correspondant spatialement à la porte distance considérée, sous la forme de M vecteurs de mesures $x_m$, chaque vecteur ayant pour composantes les K échantillons de signal reçu correspondant temporellement aux K récurrences du motif m;
 - le calcul de l'estimée $\hat{R}$ de la matrice de covariance R des M vecteurs de mesure $x_m$;
 - l'exécution d'une opération de caractérisation, qui consiste à calculer, pour chaque cellule d'analyse (1, j), une grandeur permettant de réaliser une estimation du niveau de signal reçu dans la cellule d'analyse considérée et susceptible de provenir d'un réflecteur localisé dans la porte distance correspondante à la distance caractérisant cette cellule (l, j), la valeur de cette grandeur étant déterminée à partir de l'intégration cohérente des vecteurs $x_m$ sur l'ensemble des motifs et de la matrice estimée $\hat{R}$.
 - l'élaboration d'une table comportant pour chaque cellule d'analyse la valeur de la grandeur considérée.

2. Procédé selon la revendication 1, **caractérisé en ce que** $P_m$ (k) étant défini par la relation:

$$P_m(k) \equiv (P(k) + \mu_m) \ [N],$$

P (k) et $\mu_m$ représentant des nombres entiers aléatoires, tous les nombres entiers aléatoires, P (0), P (1), $\cdots$, P (K-1), $\mu_m$ étant équi- répartis dans le domaine [0, N [,

chacune des fréquences $f_k^m$ des impulsions formant un motif m donné est définie, pour une impulsion k du motif, par la relation suivante:

$$f_k^m = f_0 + P_m(k) \cdot \Delta f \, ,$$

dans laquelle $f_0$ est la fréquence porteuse de base des impulsions émises et $\Delta f$ le pas de quantification des fréquences d'émission défini par $\Delta f = B / N$ ;

3. Procédé selon l'une des revendications 1 ou 2, **caractérisé en ce que**, la grandeur caractérisant le niveau de signal reçu pour une cellule d'analyse ($l_0$, $j_0$) donnée, calculée (742) par le traitement du signal, est l'estimation d'énergie $\hat{\rho}^2(l_0, j_0)$ définie par la relation:

$$\hat{\rho}^2(l_0, j_0) = \left| \frac{b^H(l_0, j_0) \cdot \hat{R}^{-1} \cdot z(l_0, j_0)}{b^H(l_0, j_0) \cdot \hat{R}^{-1} \cdot b(l_0, j_0)} \right|^2,$$

dans laquelle $b(l_0, j_0)$ est un vecteur ayant pour expression:

$$b(l_0, j_0) = \left( \cdots, \exp[i \cdot \Psi_k(l_0, j_0)], \cdots \right)^T,$$

avec

$$\Psi_k(l_0, j_0) = 2\pi \cdot \left[ k \cdot j_0 /(M \cdot K) - P(k) \cdot l_0 / N \right],$$

et $z(l_0, j_0)$ un vecteur ayant pour expression:

$$z(l_0, j_0) = \frac{1}{M} \sum_{m=0}^{M-1} x_m \exp - \left[ i \cdot \Phi_m(l_0, j_0) \right]$$

avec

$$\Phi_m(l_0, j_0) = 2\pi \cdot \left( m \cdot j_0 / M - \mu_m \cdot l_0 / N \right)$$

**4.** Procédé selon la revendication 3, **caractérisé en ce que** le traitement implémenté pour chaque porte distance comporte:

- une première étape (71) du traitement qui consiste à acquérir les termes $P(k)$ et $\mu_m$ définissant les motifs utilisés à l'émission.

- une deuxième étape (72) qui consiste à conditionner les $K \cdot M$ échantillons $x_k^m$ du signal reçu sous la forme de M vecteurs de mesure $x_m$, chaque vecteur ayant pour composantes les K échantillons correspondant au K récurrences d'un même motif m qui sont définis par la relation:

$$x_m = \left( x_0^m, x_1^m, ..., x_{K-1}^m \right)^T$$

où $x_k^m$ représente l'échantillon de signal reçu correspondant à l'émission de l'impulsion k du motif m;
- une troisième étape (73) qui consiste à déterminer l'estimation $\hat{R}$ de la matrice de covariance R des M vecteurs de mesure $x_m$, $\hat{R}$ étant définie par la relation suivante:

$$\hat{R} = \frac{1}{M} \sum_{m=0}^{M-1} x_m \cdot x_m^H,$$

- Une quatrième étape (74) qui considère et traite les cellules d'analyse élémentaires (I, j) l'une après l'autre et détermine pour chaque cellule la valeur de la grandeur $\hat{\rho}^2(I, j)$;

l'exécution de la quatrième étape conduisant à l'élaboration d'une table comportant pour chaque cellule d'analyse la valeur de la grandeur $\hat{\rho}^2(I, j)$.

**5.** Procédé selon la revendication 4, **caractérisé en ce que** la quatrième étape (74) met en oeuvre trois boucles de traitement imbriquées:

- une boucle de premier niveau (75), qui exécute pour chacune des cellules d'analyse élémentaire (I, j) une opération itérative (741) consistant à chaque itération à considérer un motif particulier, et à calculer, la valeur courante du vecteur z(I, j) définie par la relation suivante:

$$z = z + x_m \cdot \exp[-i \cdot \Phi_m(I, j)],$$

chaque itération étant terminée par un test permettant de déterminer si l'ensemble des M motifs a été pris en compte et de relancer une itération si tel n'est pas le cas.
- une boucle de deuxième niveau (76) qui, pour chacune des cellules d'analyse (1, j) correspondant à une même valeur du paramètre de Doppler j, exécute de manière itérative une opération (743) d'initialisation à 0 du vecteur z et de construction du vecteur b, puis lance l'exécution de la boucle de premier niveau (75) et l'exécution de l'opération (742) de calcul de $\hat{\rho}^2(I, j)$; chaque itération étant terminée par un test permettant de déterminer si l'ensemble des valeurs du paramètre 1 a été pris en compte et de relancer une itération si tel n'est pas le cas.
- une boucle de troisième niveau (77), qui gère l'ensemble des valeurs du paramètre de Doppler j et lance l'exécution itérative de la boucle de deuxième niveau (76) pour chaque valeur de j; chaque itération étant terminée par un test permettant de déterminer si l'ensemble des valeurs du paramètre j a été pris en compte et de relancer une itération si tel n'est pas le cas.

**6.** Procédé selon l'une des revendications 1 ou 2, **caractérisé en ce que**, la grandeur caractérisant le niveau de signal reçu calculé pour une cellule d'analyse $(I_0, j_0)$ donnée, calculée (742) par le traitement du signal, est une grandeur $\gamma(I_0, j_0)$ définie par la relation:

$$\gamma(I_0, j_0) = \frac{\left| b^H(I_0, j_0) \cdot \hat{R}^{-1} \cdot z(I_0, j_0)^2 \right|}{b^H(I_0, j_0) \cdot \hat{R}^{-1} \cdot b(I_0, j_0)},$$

dans laquelle $b(I_0, j_0)$ est un vecteur ayant pour expression:

$$b(I_0, j_0) = (\cdots, \exp[i \cdot \Psi_k(I_0, j_0)], \cdots)^T$$

avec

$$\Psi_k(I_0, j_0) = 2\pi \cdot [k \cdot j_0 /(M \cdot K) - P(k) \cdot I_0 / N],$$

et $z(I_0, j_0)$ un vecteur ayant pour expression:

$$z(l_0, j_0) = \frac{1}{M} \sum_{m=0}^{M-1} x_m \exp - \left[ i \cdot \Phi_m(l_0, j_0) \right]$$

avec

$$\Phi_m(l_0, j_0) = 2\pi \cdot \left( m \cdot j_0 / M - \mu_m \cdot l_0 / N \right);$$

cette grandeur étant utilisée pour réaliser la détection des réflecteurs, une détection étant constatée lorsque $\gamma(l_0, j_0)$ a une valeur supérieure à un seuil fixé, ce seuil étant fonction d'une probabilité de fausse alarme donnée.

**7.** Procédé selon la revendication 6, **caractérisé en ce que** le traitement implémenté pour chaque porte distance comporte:

- une première étape (71) du traitement qui consiste à acquérir les termes P(k) et $\mu_m$ définissant les motifs utilisés à l'émission et sauvegardés à cet effet.

- une deuxième étape (72) qui consiste à conditionner les K·M échantillons $x_k^m$ du signal reçu sous la forme de M vecteurs de mesure $x_m$, chaque vecteur ayant pour composantes les K échantillons correspondant au K récurrences d'un même motif m étant défini par la relation:

$$x_m = \left( x_0^m, x_1^m, ..., x_{K-1}^m \right)^T$$

où $x_k^m$ représente l'échantillon de signal reçu correspondant à l'émission de l'impulsion k du motif m;

- une troisième étape (73) qui consiste à déterminer l'estimation $\hat{R}$ de la matrice de covariance R des M vecteurs de mesure $x_m$, $\hat{R}$ étant définie par la relation suivante:

$$\hat{R} = \frac{1}{M} \sum_{m=0}^{M-1} x_m \cdot x_m^H ,$$

- Une quatrième étape (74) qui considère et traite les cellules d'analyse élémentaires (l, j) l'une après l'autre et détermine pour chaque cellule la valeur de la grandeur y(l, j) et à déterminer si un réflecteur est détecté dans la cellule considérée;

l'exécution de la quatrième étape conduisant à l'élaboration d'une table comportant pour chaque cellule d'analyse la valeur 1 ou 0 du critère de détection.

**8.** Procédé selon la revendication 7, **caractérisé en ce que** la quatrième étape (74) met en oeuvre trois boucles de traitement imbriquées:

- une boucle de premier niveau (75), qui exécute pour chacune des cellules d'analyse élémentaire (l, j) une opération itérative (741) consistant à chaque itération à considérer un motif particulier, et à calculer, la valeur courante du vecteur z(l, j) définie par la relation suivante:

$$z = z + x_m \cdot \exp\left[-i \cdot \Phi_m(l, j)\right],$$

chaque itération étant terminée par un test permettant de déterminer si l'ensemble des M motifs a été pris en compte et de relancer une itération si tel n'est pas le cas.

- une boucle de deuxième niveau (76) qui, pour chacune des cellules d'analyse (l, $j_0$) correspondant à une même valeur du paramètre de Doppler j, exécute de manière itérative une opération (743) d'initialisation à 0 du vecteur z et de construction du vecteur b, puis lance l'exécution de la boucle de premier niveau (75) et l'exécution de l'opération (842) de calcul de $\gamma$(l, j); et de détermination de la valeur du critère de détection, chaque itération étant terminée par un test permettant de déterminer si l'ensemble des valeurs du paramètre 1 a été pris en compte et de relancer une itération si tel n'est pas le cas.

- une boucle de troisième niveau (77), qui gère l'ensemble des valeurs du paramètre de Doppler j et lance l'exécution itérative de la boucle de deuxième niveau (76) pour chaque valeur de j; chaque itération étant terminée par un test permettant de déterminer si l'ensemble des valeurs du paramètre j a été pris en compte et de relancer une itération si tel n'est pas le cas.

**9.** Procédé selon l'une quelconque des revendications précédentes, **caractérisé en ce que**, le filtrage adapté appliqué au signal reçu étant configuré de façon à former des portes distance naturelles de durée $2T_i$ espacées dans le temps de l'intervalle de temps $\Delta\tau_c$ inférieur à $2T_i$ et dont le gain varie en décroissant depuis le centre de la porte jusqu'à ses limites inférieure et supérieure, $\Delta\tau_c$ est déterminé de telle sorte que le signal reçu puisse toujours être analysé dans une zone centrale de la porte distance de largeur $\Delta\tau_c$ pour laquelle il présente une atténuation par rapport au niveau maximum délivré par le filtre adapté inférieure à une valeur donnée $\alpha$; l'analyse à haute résolution du signal reçu pour chaque porte distance étant alors limitée en distance à un intervalle centré correspondant à $\Delta\tau_c$.

**10.** Procédé selon la revendication 9, **caractérisé en ce que** le filtre adapté définissant des portes distance naturelles dont le gain varie en décroissant linéairement depuis le centre de la porte jusqu'à ses limites inférieure et supérieure, la valeur de l'intervalle de temps $\Delta\tau_c$ est déterminé par la relation suivante:

$$\Delta\tau_C = 2 \cdot T_i \cdot (1 - \alpha) \qquad \alpha \in \,]0,1[$$

où $\alpha$ représente l'atténuation maximale tolérée, normalisée à 1.

**11.** Procédé selon l'une des revendications précédentes, **caractérisé en ce que** l'analyse haute résolution mettant en oeuvre un double échantillonnage en distance et en Doppler suivant deux pas d'échantillonnage ($\delta\tau$, $\delta\varphi$) identiques décalés d'un demi pas en distance, de façon à ce qu'une porte distance soit maillée par des cellule d'analyse élémentaires (l, j) constituant deux groupes, un premier groupe de cellules définies par un paramètre 1 prenant des valeurs entières paires et un second groupe de cellules définies par un paramètre 1 prenant des valeurs entières impaires, le traitement mis en oeuvre par le procédé comporte en outre:

- un étape complémentaire exécutée entre l'étape de mise en forme des échantillons de signal reçu sous la forme de M vecteurs de mesures $x_m$, et l'étape de calcul de la matrice de l'estimée $\hat{R}$ de la matrice de covariance R; cette étape effectuant la construction de deux jeux de vecteurs de mesure $y_m$ [0] et $y_m$ [1], définis par les relations suivantes:

$$y_k^m[0] = x_k^m$$

et

$y_k^m[1] = \pm x_k^m$ suivant la parité du résultat de la division entière de $P(k) + \mu_m$ par N.

- une étape de calcul des estimées $\hat{R}[0]$ et $\hat{R}[1]$ des matrices de covariance R[0] et R[1] des M vecteurs de mesure $y_m[0]$ et $y_m[1]$; cette étape venant se substituer à l'étape de calcul de l'estimée $\hat{R}$ de la matrice de covariance R des M vecteurs de mesure $x_m$;

- une opération de choix préalable à l'exécution de la boucle de niveau 1 (75) de la quatrième étape (74) ayant pour objet d'effectuer, pour la cellule d'analyse élémentaire (l$_0$, j$_0$) considérée, le test de la parité du paramètre l$_0$ et de déterminer lequel des vecteurs y$_m$[0] et y$_m$[1] et laquelle des estimées $\hat{R}$[0] et $\hat{R}$[1] de la matrice de covariance doivent être utilisés pour exécuter la boucle de niveau 1 (75) pour la cellule considérée; la boucle de niveau 1 étant exécutée en utilisant y$_m$[0] et $\hat{R}$[0] si l$_0$ est pair et en utilisant y$_m$[1]et $\hat{R}$[1] si l$_0$ est impair

## Patentansprüche

1. Verfahren zum Durchführen einer hochauflösenden Fern- und Doppleranalyse der von einer bestimmten Raumzone empfangenen radioelektrischen Signale, wobei die empfangenen Signale nach Anwendung eines geeigneten Filters über sogenannte natürliche Entfernungstore, die nach der Breite des angewendeten geeigneten Filters definiert sind, analysiert werden, **dadurch gekennzeichnet, dass** es umfasst:

   - die Ausstrahlung einer bestimmten Wellenlänge, die M Pakete aus K Impulsen, Motive genannt, von der Dauer T$_i$ enthält und die mit einer Wiederkehrperiode T gesendet wird, wobei die Frequenzen der K Impulse in einem gegebenen zugeteilten Frequenzbereich B bestimmt werden, wobei die Frequenzen der Impulse, die dasselbe Motiv m im Band B ausbilden für zwei beliebige Wiederholungen k und k' mit folgender Formel definiert sind:

$$P_m(k) - P_m(k') = S(k,k')$$

   in der S(k, k') eine beliebige Funktion von k und k' unabhängig von m, P$_m$(k) die Durchführung von aleatorischen Ziehungen, die alle von den für die K Wiederholungen des Motivs m gesendeten Frequenzen verschieden sind, darstellt;
   - den Empfang des Signals aus der fraglichen Raumzone und die Abtastung des empfangenen Signals für eine beliebige der natürlichen Entfernungstore mit der Breite 2T$_i$ wobei das Signal verzögert und im Dopplerverfahren nach einem Abtastschritt ($\delta\tau$, $\delta\phi$) erfolgt, der sich nach der nachfolgenden Formel definiert:

$$\begin{cases} \delta\tau = 1/(N \cdot \Delta f) = 1/B\,, \\ \\ \delta\phi = 1/(M \cdot K \cdot T) \end{cases}$$

   in der N die Anzahl der möglichen Werte der Funktion Pm (k), d.h. die Anzahl der zugeteilten Frequenzen, ist und M.K die Anzahl der gesendeten Impulse insgesamt ist;
   wobei das natürliche Entfernungstor auf diese Weise in Elementaranalysezellen aufgeteilt wird, jede Elementarzelle anhand der Parameter 1 und j identifiziert wird, die deren Abstands- und Dopplerposition im Abtastungsbereich des natürlichen Entfernungstors bezeichnen;
   - die Verarbeitung des empfangenen Signals für ein gegebenes Entfernungstor, wobei diese Verarbeitung umfasst:
   - Formatierung der Proben des empfangenen Signals, die räumlich dem fraglichen Entfernungstor entsprechen in Form von M Messvektoren x$_m$, wobei jeder Vektor aus den K Proben des empfangenen Signals besteht, die zeitlich den K Wiederholungen des Motivs m entsprechen;
   - die Berechnung des Schätzwertes R der Kovarianzmatrix R der M Messvektoren x$_m$;
   - Die Ausführung einer Charakterisierungsoperation, die darin besteht, für jede Analysezelle (1, j) eine Größe zu berechnen, die eine Schätzung des in der fraglichen Analysezelle empfangenen Signalniveaus ermöglicht und von einem in dem dem diese Zelle (1, j) charakterisierenden Entfernungstor entsprechenden Reflektor herrühren kann, wobei der Wert dieser Größe sich nach der kohärenten Integration der Vektoren xm für alle Motive und der geschätzten Matrix $\hat{R}$ bestimmt;
   - die Erstellung einer Tabelle, die für jede Analysezelle den Wert der fraglichen Größe enthält.

2. Verfahren nach Anspruch 1, **dadurch gekennzeichnet, dass** wenn sich P$_m$ (k) nach dem nachfolgenden Verhältnis definiert:

$$P_m(k) \equiv (P(k) + \mu_m) \ [N],$$

wobei P (k) und $\mu$m zufällig gewählte Ganzzahlen darstellen und alle willkürlich gewählten Ganzzahlen p (0), p (1), ..., P (K- 1), $\mu_m$, in der Domäne [0, N [ gleichmäßig verteilt sind jede der Frequenzen der Impulse, die für einen Impuls k des Motivs ein bestimmtes Motiv m ausbilden nach dem nachfolgenden Verhältnis definiert wird:

$$f_k^m = f_0 + P_m(k) \cdot \Delta f,$$

wobei $f_0$ die Basis- Trägerfrequenz der gesendeten Impulse ist und $\Delta f$ den Quantifizierungsschritt der nach $\Delta f = B/N$ definierten Sendefrequenzen darstellt;

3. Verfahren nach einem der Ansprüche 1 oder 2, **dadurch gekennzeichnet, dass** die zur Bearbeitung des Signals berechnete (742) Größe, die für eine bestimmte Analysezelle ($l_0$,$j_0$) das empfangene Signalniveau charakterisiert, die Energieschätzwerte $\hat{\rho}(l_0, j_0)$ ist, die sich nach dem nachfolgenden Verhältnis definiert:

$$\hat{\rho}^2(l_0, j_0) = \frac{\left| b^H(l_0, j_0) \cdot \hat{R}^{-1} \cdot z(l_0, j_0) \right|^2}{\left| b^H(l_0, j_0) \cdot \hat{R}^{-1} \cdot b(l_0, j_0) \right|},$$

in dem b($l_0$,$j_0$) ein Vektor ist, der den nachfolgenden Ausdruck aufweist:

$$b(l_0, j_0) = \left( \cdots, \exp\left[ i \cdot \Psi_k(l_0, j_0) \right], \cdots \right)^T,$$

wobei

$$\Psi_k(l_0, j_0) = 2\pi \cdot [k \cdot j_0/(M \cdot K) - P(k) \cdot l_0/N],$$

und z($l_0$,$j_0$) ein Vektor ist, der den nachfolgenden Ausdruck aufweist:

$$z(l_0, j_0) = \frac{1}{M} \sum_{m=0}^{M-1} x_m \exp{-\left[ i \cdot \Phi_m(l_0, j_0) \right]}$$

wobei

$$\Phi_m(l_0, j_0) = 2\pi \cdot \left( m \cdot j_0 / M - \mu_m \cdot l_0 / N \right)$$

4. Verfahren nach Anspruch 3, **dadurch gekennzeichnet, dass** die auf jedes Entfernungstor angewendete Bearbeitung umfasst:

- einen ersten Bearbeitungsschritt (71), der in der Erfassung der Ausdrücke P(k) und $\mu$m, besteht, die die bei der Sendung verwendeten Motive definieren;
- einen zweiten Schritt (72), der in der Konditionierung der K$\cdot$M Proben $x_k^m$ des empfangenen Signals in Form von M Messvektoren $x_m$ besteht, wobei jeder Vektor als Komponente die K Proben enthält, die den K Wiederholungen eines einzigen Motivs m entsprechen, die sich nach dem nachfolgenden Verhältnis definieren:

$$X_m = \left(x_0^m, x_1^m, ..., x_{K-1}^m\right)^T$$

in dem $x^m{}_k$ die empfangene Signalprobe darstellt, die der Sendung des Impulses k des Motivs m entspricht;
- einen dritten Schritt (73), der in der Bestimmung des Schätzwertes $\hat{R}$ der Kovarianzmatrix R der M Messvektoren $x_m$ besteht, wobei sich $\hat{R}$ nach dem nachfolgenden Verhältnis definiert:

$$\hat{R} = \frac{1}{M} \sum_{m=0}^{M-1} x_m \cdot x_m^H,$$

- einen vierten Schritt (74), bei dem die Elementaranalysezellen (1, j) eine nach der anderen betrachtet und bearbeitet werden und für jede Zelle der Wert der Größe $\hat{\rho}^2$ (I, j)$_{\text{ermittelt wird}}$;
wobei die Ausführung des vierten Schritts zur Erstellung einer Tabelle führt, die für jede Analysezelle den Wert der Größe $\hat{\rho}^2$ (I, j) enthält.

5. Verfahren nach Anspruch 4, **dadurch gekennzeichnet, dass** der vierte Schritt (74) drei miteinander verschachtelte Bearbeitungsschleifen ausführt:

- eine Schleife auf einer ersten Ebene (75), die für jede der Elementaranalysezellen (1, j) eine iterative Operation (741) ausführt, die bei jeder Iteration in der Betrachtung eines bestimmten Motivs und der Berechnung des aktuellen Werts des Vektors z(I,j) besteht, der sich nach dem nachfolgenden Verhältnis definiert:

$$z = z + x_m \cdot \exp[-i \cdot \Phi_m (I, j)],$$

wobei jede Iteration mit einer Prüfung endet, mit der ermittelt werden kann, ob die M Motive insgesamt berücksichtigt wurden und verneinendenfalls die Wiederholung einer Iteration veranlassen kann;
- eine Schleife auf einer zweiten Ebene (76), die für jede der Analysezellen (1, j), die einem einzigen Wert des Dopplerparameters j entspricht, eine Operation (743) zur Initialisierung des Vektors z bei 0 und des Aufbaus des Vektors b iterativ ausführt, und anschließend die Ausführung der Schleife auf der ersten Ebene (75) und die Operation (742) zur Berechnung von $\hat{\rho}^2$(I,j) veranlasst; wobei jede Iteration mit einer Prüfung endet, mit der ermittelt werden kann, ob die Werte des Parameters 1 insgesamt berücksichtigt wurden und verneinendenfalls die Wiederholung einer Iteration veranlassen kann;
- eine Schleife auf dritter Ebene (77), die die Werte des Dopplerparameters j insgesamt verwaltet und für jeden Wert von j die iterative Ausführung der Schleife der zweiten Ebene (76) veranlasst; wobei jede Iteration mit einer Prüfung endet, mit der ermittelt werden kann, ob die Werte des Parameters j insgesamt berücksichtigt wurden und verneinendenfalls die Wiederholung einer Iteration veranlassen kann;

6. Verfahren nach einem der Ansprüche 1 oder 2, **dadurch gekennzeichnet, dass** die Größe, die für eine bestimmte Analysezelle ($l_0$,$j_0$), die durch die Signalverarbeitung berechnet wird, das berechnete Signalniveau charakterisiert, eine Größe $\gamma(l_0, j_0)$ ist, die sich nach dem nachfolgenden Verhältnis definiert:

$$\gamma(l_0, j_0) = \frac{\left| b^H(l_0, j_0) \cdot \hat{R}^{-1} \cdot z(l_0, j_0)^2 \right|}{b^H(l_0, j_0) \cdot \hat{R}^{-1} \cdot b(l_0, j_0)},$$

in dem b($l_0$,$j_0$) ein Vektor ist, der den nachfolgenden Ausdruck aufweist:

$$b(l_0, j_0) = \left( \cdots, \exp[i \cdot \Psi_k (l_0, j_0)], \cdots \right)^T$$

Wobei

$$\Psi_k \left(l_0, j_0\right) = 2\pi \cdot \left[k \cdot j_0 /(M \cdot K) - P(k) \cdot l_0 / N\right],$$

und $z(l_0, j_0)$ ein Vektor ist, der den nachfolgenden Ausdruck aufweist:

$$z(l_0, j_0) = \frac{1}{M} \sum_{m=0}^{M-1} x_m \exp - \left[i \cdot \Phi_m(l_0, j_0)\right]$$

$$\Phi_m\left(l_0, j_0\right) = 2\pi \cdot \left(m \cdot j_0 / M - \mu_m \cdot l_0 / N\right);$$

wobei

wobei diese Größe zur Erkennung der Reflektoren verwendet wird und die Erkennung bestätigt wird, wenn $\gamma(l_0, j0)$ einen Wert aufweist, der einen bestimmten Schwellenwert übersteigt, der von einer bestimmten Wahrscheinlichkeit eines Fehlalarms abhängt.

**7.** Verfahren nach Anspruch 6, **dadurch gekennzeichnet, dass** die auf jedes Entfernungstor angewendete Bearbeitung umfasst:

- einen ersten Bearbeitungsschritt (71), der in der Erfassung der Ausdrücke P(k) und $\mu_m$ besteht, die die bei der Sendung verwendeten und zu diesem Zweck gespeicherten Motive definieren;

- einen zweiten Schritt (72), der in der Konditionierung der K·M Proben $x_k^m$ des empfangenen Signals in Form von M Messvektoren $x_m$ besteht, wobei jeder Vektor als Komponenten die K Proben enthält, die den K Wiederholungen eines einzigen Motivs m besteht, die sich nach dem nachfolgenden Verhältnis definieren:

$$x_m = \left(x_0^m, x_1^m, \ldots, x_{K-1}^m\right)^T$$

Wobei $x_k^m$ die empfangene Signalprobe darstellt, die der Sendung des Impulses k des Motivs m entspricht;
- einen dritten Schritt (73), der in der Bestimmung des Schätzwertes $\hat{R}$ der Kovarianzmatrix R der M Messvektoren $x_m$ besteht, wobei sich $\hat{R}$ nach dem nachfolgenden Verhältnis definiert:

$$\hat{R} = \frac{1}{M} \sum_{m=0}^{M-1} x_m \cdot x_m^H,$$

- einen vierten Schritt (74), bei dem die Elementaranalysezellen (1, j) eine nach der anderen betrachtet und bearbeitet werden und für jede Zelle der Wert der Größe $\hat{\rho}^2(l,j)$ ermittelt wird und festgestellt wird, ob ein Reflektor in der fraglichen Zelle erkannt wird;
wobei die Ausführung des vierten Schritts zur Erstellung einer Tabelle führt, die für jede Analysezelle den Wert 1 oder 0 des Erkennungskriteriums enthält.

**8.** Verfahren nach Anspruch 7, **dadurch gekennzeichnet, dass** der vierte Schritt (74) drei miteinander verschachtelte Bearbeitungsschleifen ausführt:

- eine Schleife auf einer ersten Ebene (75), die für jede der Elementaranalysezellen (1, j) eine iterative Operation (741) ausführt, die bei jeder Iteration in der Betrachtung eines bestimmten Motivs und der Berechnung des aktuellen Werts des Vektors z(l,j) besteht, der sich nach dem nachfolgenden Verhältnis definiert:

$$z = z + x_m \cdot \exp\left[-i \cdot \Phi_m(l, j)\right],$$

wobei jede Iteration mit einer Prüfung endet, mit der ermittelt werden kann, ob die M Motive insgesamt berücksichtigt wurden und verneinendenfalls die Wiederholung einer Iteration veranlassen kann;

- eine Schleife auf einer zweiten Ebene (76), die für jede der Analysezellen (l,j$_0$), die einem einzigen Wert des Dopplerparameters j entspricht, eine Operation (743) zur Initialisierung des Vektors z bei 0 und des Aufbaus des Vektors b iterativ ausführt, und anschließend die Ausführung der Schleife auf der ersten Ebene (75) und die Operation (842) zur Berechnung von $\gamma$(l,j) veranlasst; und den Wert des Erkennungskriteriums ermittelt, wobei jede Iteration mit einer Prüfung endet, mit der ermittelt werden kann, ob die Werte des Parameters 1 insgesamt berücksichtigt wurden und verneinendenfalls die Wiederholung einer Iteration veranlassen kann;

- eine Schleife auf dritter Ebene (77), die die Werte des Dopplerparameters j insgesamt verwaltet und für jeden Wert von j die iterative Ausführung der Schleife der zweiten Ebene (76) veranlasst; wobei jede Iteration mit einer Prüfung endet, mit der ermittelt werden kann, ob die Werte des Parameters j insgesamt berücksichtigt wurden und verneinendenfalls die Wiederholung einer Iteration veranlassen kann;

9. Verfahren nach einem der vorstehenden Ansprüche, **dadurch gekennzeichnet, dass** wenn der auf das empfangene Signal angewendete angepasste Filter derart konfiguriert ist, dass natürliche Entfernungstore der Dauer 2T$_i$ ausgebildet werden, und dessen Verstärkung vom Mittelpunkt des Intervalls bis zu dessen Unter- und Obergrenzen nach unten tendiert, $\Delta\tau_c$ derart bestimmt wird, dass das empfangene Signal stets in einer mittleren Zone des Entfernungstors mit der Breite $\Delta\tau_c$ analysiert werden kann, für die es eine Abschwächung gegenüber des von dem angepassten Filter gelieferten Höchstwert aufweist, die kleiner ist als ein bestimmter Wert $\alpha$; wobei die hochauflösende Analyse des empfangenen Signals für jedes Entfernungstor dann auf ein zentriertes Intervall beschränkt ist, das $\Delta\tau_c$ entspricht.

10. Verfahren nach Anspruch 9, **dadurch gekennzeichnet, dass** der angepasste Filter, der die natürlichen Entfernungstore definiert, deren Verstärkung ab dem Mittelpunkt des Intervalls hin zu den Unter- und Obergrenzen linear nach unten tendiert einen Zeitintervallwert $\Delta\tau_c$ aufweist, der sich nach dem nachfolgenden Verhältnis definiert:

$$\Delta\tau_C = 2 \cdot T_i \cdot (1 - \alpha) \qquad \alpha \in \,]0,1[$$

wobei $\alpha$ die auf 1 normalisierte annehmbare Höchstabschwächung darstellt.

11. Verfahren nach einem der vorstehenden Ansprüche, **dadurch gekennzeichnet, dass** die hochauflösende Analyse, die eine doppelte Bereichs- und Dopplerverfahren ausführt, zwei identische Abtastschritte ($\delta\tau$, $\delta\varphi$) umfasst, die um einen Halbschritt voneinander beabstandet sind, so dass ein Entfernungstor mit Elementaranalysezellen (1, j) vermascht ist, die zwei Gruppen darstellen, wobei eine erste, durch einen Parameter 1 definierte Gruppe gerade Ganzzahlenwerte nimmt und eine zweite durch einen Parameter 1 definierte Zellengruppe ungerade Ganzzahlenwerte nimmt und die im Verfahren ausgeführte Bearbeitung ferner die nachfolgenden Schritte umfasst:

- einen zwischen der Sortierung der in Form von M Messvektoren x$_m$ empfangenen Signalproben und der Berechnung der Matrix der Schätzwert R der Kovarianzmatrix R ausgeführten Schritt, bei dem zwei Reihen von Messvektoren y$_m$ [0] und y$_m$ [1] erstellt werden, die sich nach den nachfolgenden Verhältnissen definieren:

$$y_k^m[0] = \quad x_k^m$$

und

$$y_k^m[1] = \quad \pm\, x_k^m \quad \text{je nach der Parität des Ergebnisses der Integralteilung von } P(k) + \mu_m \text{ durch N;}$$

- einen Schritt der Berechnung der Schätzwerte $\hat{R}$ [0] und $\hat{R}$ [1] der Kovarianzmatrizen R[0] und R[1] der Messvektoren y$_m$[0] und y$_m$[1]; der die Berechnung der Schätzwerte R der Kovarianzmatrix R der M Messvektoren x$_m$ ersetzt;

- eine der Ausführung der Schleife der 1. Ebene (75) des vierten Schritts (74) vorausgehende Auswahloperation, bei der für die fragliche Elementaranalysezelle (l$_0$,j$_0$) die Parität des Parameters l$_0$ geprüft wird und ermittelt wird, welcher der Vektoren y$_m$[0] und y$_m$[1] und welche der Schätzwerte $\hat{R}$ [0] und $\hat{R}$[1] der Kovarianzmatrix zur Ausführung der Schleife der 1. Ebene (75) für die fragliche Zelle zu verwenden ist; wobei die Schleife der 1.

Ebene mit $y_m[0]$ und $\hat{R}[0]$ ausgeführt wird, wenn $l_0$ eine gerade Zahl ist und mit $y_m[1]$ und $\hat{R}[1]$, wenn $l_0$ eine ungerade Zahl ist.

**Claims**

1. A method for carrying out a high-resolution range and Doppler analysis of radio signals received from a given area of space, said received signals being analysed by baseband, after applying matched filtering, through so-called range gates, defined by the width of the response of the applied matched filter, **characterised in that** it comprises:

   - transmitting a particular waveform comprising M packets of K pulses, referred to as patterns, of duration $T_i$, transmitted with a recurrence period T, the frequencies of the K pulses being determined in a given assigned frequency band B, the pulse frequencies forming the same pattern m being defined in the band B, for any two returns k and k', by the following relation:

   $$P_m(k) - P_m(k') = S(k, k'),$$

   where S(k, k') represents any function of k and k' independent of m, $P_m(k)$ representing the completion of random draws that all differ from the frequencies transmitted for the K recurrences of the pattern m;
   - receiving the signal originating from the area in the considered space and sampling the signal received for each of the natural range gates, of width $2T_i$, the signal being sampled by delay and by Doppler according to a sampling step ($\delta\tau$, $\delta\varphi$) defined by the following relation:

   $$\begin{cases} \delta\tau = 1/(N \cdot \Delta f) = 1/B, \\[2mm] \delta\varphi = 1/(M \cdot K \cdot T) \end{cases}$$

   where N is the number of values that can be assumed by the function $P_m(k)$, i.e. the number of assigned frequencies, and where M·K is the total number of transmitted pulses;
   the natural range gate thus being divided into elementary analysis cells, each elementary cell being identified by the parameters 1 and j characterising its position by range and by Doppler in the sampling space of the natural range gate;
   - processing the received signal for a given range gate, said processing comprising:
   - shaping received signal samples spatially corresponding to the considered range gate in the shape of M measurement vectors $x_m$, each vector having as components the K received signal samples temporally corresponding to the K recurrences of the pattern m;
   - calculating the estimate R of the covariance matrix R of the M measurement vectors $x_m$;
   - executing a characterisation operation, which consists in calculating, for each analysis cell (l, j), a magnitude allowing an estimate of the level of the received signal to be carried out in the considered analysis cell and which is likely to originate from a reflector located within the range gate corresponding to the range characterising said cell (1, j), the value of this magnitude being determined on the basis of the coherent integration of the vectors $x_m$ over all of the patterns and of the estimated matrix $\hat{R}$ ;
   - developing a table comprising, for each analysis cell, the value of the considered magnitude.

2. The method according to claim 1, **characterised in that** with $P_m(k)$ being defined by the following relation:

   $$P_m(k) \equiv (P(k) + \mu_m),$$

   P(k) and $\mu_m$ representing random integers, all of the random integers, P(0), P(1), ..., P(K- 1), $\mu_m$ being equally distributed in the domain [O, N [;
   each of the frequencies $f_k{}^m$ of the pulses forming a given pattern m is defined, for a pulse k of the pattern, by the following relation:

$$f_k{}^m = f_o + P_m(k) \cdot \Delta f,$$

in which $f_o$ is the base carrier frequency of the transmitted pulses and $\Delta f$ is the quantification step of the transmission frequencies defined by $\Delta f = B / N$.

3. The method according to claim 1 or 2, **characterised in that** the magnitude characterising the received signal level for a given analysis cell $(l_0, j_0)$, calculated (742) by the signal processing, is the energy estimate $\hat{\rho}^2$ $(l_0, j_0)$ defined by the following relation:

$$\hat{\rho}^2 (l_0, j_0) = \left| \frac{b^H (l_0, j_0) \cdot \hat{R}^{-1} \cdot z(l_0, j_0)}{b^H (l_0, j_0) \cdot \hat{R}^{-1} \cdot b(l_0, j_0)} \right|^2,$$

in which b(lo, jo) is a vector expressed as:

$$b(l_0, j_0) = (\cdots, \exp[i \cdot \Psi_k (l_0, j_0)] \cdots)^T,$$

with

$$\Psi_k (l_0, j_0) = 2\pi \cdot [k \cdot j_0 /(M \cdot K) - P(k) \cdot l_0 / N],$$

and $z(l_0, j_0)$ is a vector expressed as:

$$z(l_0, j_0) = \frac{1}{M} \sum_{m=0}^{M-1} x_m \exp-[i \cdot \Phi_m(l_0, j_0)]$$

with

$$\Phi_m (l_0, j_0) = 2\pi \cdot (m \cdot j_0 / M - \mu_m \cdot l_0 / N)$$

4. The method according to claim 3, **characterised in that** the processing implemented for each range gate comprises:

  - a first processing step (71) that consists in acquiring the terms P(k) and $\mu_m$ defining the patterns used during the transmission;
  - a second step (72) that consists in conditioning the $K \cdot M$ samples $x_k{}^m$ of the received signal in the shape of M measurement vectors $x_m$, each vector having as components the K samples corresponding to the K recurrences of the same pattern m that are defined by the following relation:

$$x_m = \left( x_0^m, x_1^m, \ldots, x_{K-1}^m \right)^T$$

where $x_k{}^m$ represent the received signal sample corresponding to the transmission of the pulse k of the pattern m;

  - a third step (73) that consists in determining the estimate $\hat{R}$ of the covariance matrix R of the M measurement vectors $x_m$, $\hat{R}$ being defined by the following relation:

$$\hat{R} = \frac{1}{M} \sum_{m=0}^{M-1} x_m \cdot x_m^H \, ,$$

- a fourth step (74) that considers and processes the elementary analysis cells (l, j) one after the other and determines the value of the magnitude $\hat{\rho}^2(l, j)$ for each cell;

the execution of the fourth step leading to the development of a table comprising the value of the magnitude $\hat{\rho}^2(l,j)$ for each analysis cell.

5. The method according to claim 4, **characterised in that** the fourth step (74) implements three nested processing loops:

- a first level loop (75) that executes, for each of the elementary analysis cells (l, j), an iterative operation (741) that consists in, upon each iteration, considering a particular pattern and in calculating the current value of the vector z(l, j) defined by the following relation:

$$z = z + x_m \cdot \exp[-i \cdot \Phi_m(l,j)],$$

each iteration being terminated by a test for determining if the set of M patterns has been taken into account and restarting an iteration if this is not the case;
- a second level loop (76) which, for each of the analysis cells (l, j) corresponding to the same value of the Doppler parameter j, executes in an iterative manner an operation (743) for setting the vector z to 0 and for constructing the vector b, then launches the execution of the first level loop (75) and the execution of the operation (742) for calculating $\hat{\rho}^2(l, j)$; each iteration being terminated by a test for determining if the set of values of the parameter 1 has been taken into account and restarting an iteration if this is not the case;
- a third level loop (77) which manages the set of values of the Doppler parameter j and launches the iterative execution of the second level loop (76) for each value of j; each iteration being terminated by a test for determining if the set of values of the parameter j has been taken into account and restarting an iteration if this is not the case.

6. The method according to claim 1 or 2, **characterised in that** the magnitude characterising the received signal level calculated for a given analysis cell $(l_0, j_0)$, calculated (742) by the signal processing, is a magnitude $\gamma(l_0, j_0)$ defined by the following relation:

$$\gamma(l_0, j_0) = \frac{\left| b^H(l_0, j_0) \cdot \hat{R}^{-1} \cdot z(l_0, j_0)^2 \right|}{b^H(l_0, j_0) \cdot \hat{R}^{-1} \cdot b(l_0, j_0)} \, ,$$

in which b(lo, jo) is a vector expressed as:

$$b(l_0, j_0) = (\cdots, \exp[i \cdot \Psi_k(l_0, j_0)], \cdots)^T \, ,$$

with

$$\Psi_k(l_0, j_0) = 2\pi \cdot \left[ k \cdot j_0 / (M \cdot K) - P(k) \cdot l_0 / N \right],$$

and $z(l_0, j_0)$ is a vector expressed as:

$$z(l_0, j_0) = \frac{1}{M} \sum_{m=0}^{M-1} x_m \exp-\left[i \cdot \Phi_m(l_0, j_0)\right]$$

with

$$\Phi_m(l_0, j_0) = 2\pi \cdot \left(m \cdot j_0 / M - \mu_m \cdot l_0 / N\right);$$

this magnitude being used to detect reflectors, a detection being identified when the value of $\gamma(l_0, j_0)$ is greater than a fixed threshold, said threshold being a function of a given false alarm probability.

**7.** The method according to claim 6, **characterised in that** the processing implemented for each range gate comprises:

- a first processing step (71) that consists in acquiring the terms P(k) and $\mu_m$ defining the patterns used during the transmission and which are saved to this end;
- a second step (72) that consists in conditioning the K·M samples $x_k^m$ of the received signal in the form of M measurement vectors $x_m$, each vector having as components the K samples corresponding to the K recurrences of the same pattern m being defined by the following relation:

$$x_m = \left(x_0^m, x_1^m, \ldots, x_{K-1}^m\right)^T,$$

where $x_k^m$ represents the received signal sample corresponding to the transmission of the pulse k of the pattern m;
- a third step (73) that consists in determining the estimate $\hat{R}$ of the covariance matrix R of the M measurement vectors $x_m$, $\hat{R}$ being defined by the following relation:

$$\hat{R} = \frac{1}{M} \sum_{m=0}^{M-1} x_m \cdot x_m^H,$$

- a fourth step (74) that considers and processes the elementary analysis cells (l, j) one after the other and determines for each cell the value of the magnitude y(l, j) and determines if a reflector is detected in the considered cell;
the execution of the fourth step leading to the development of a table comprising for each analysis cell the value 1 or 0 of the detection criterion.

**8.** The method according to claim 7, **characterised in that** the fourth step (74) implements three nested processing loops:

- a first level loop (75) that executes, for each of the elementary analysis cells (l, j), an iterative operation (741) that consists in, upon each iteration, considering a particular pattern and in calculating the current value of the vector z(l, j) defined by the following relation:

$$z = z + x_m \cdot \exp\left[-i \cdot \Phi_m(l, j)\right],$$

each iteration being terminated by a test for determining if the set of M patterns has been taken into account and repeating an iteration if this is not the case;
- a second level loop (76) which, for each of the analysis cells (l, j₀) corresponding to the same value of the Doppler parameter j, executes in an iterative manner an operation (743) for setting the vector z to 0 and for constructing the vector b, then launches the execution of the first level loop (75) and the execution of the operation (742) for calculating $\gamma(l,j)$ and for determining the value of the detection criterion, each iteration being terminated by a test for determining if the set of values of the parameter 1 has been taken into account and restarting an iteration if this is not the case;
- a third level loop (77) which manages the set of values of the Doppler parameter j and launches the iterative execution of the second level loop (76) for each value of j; each iteration being terminated by a test for determining if the set of values of the parameter j has been taken into account and restarting an iteration if this is not the case.

**9.** The method according to any one of the preceding claims, **characterised in that**, with the matched filtering applied to the received signal being configured so as to form natural range gates of duration $2T_i$ separated over time by the time interval $\Delta\tau_c$ lower than $2T_i$ and for which the gain varies by decreasing from the centre of the window to its lower and upper limits, $\Delta\tau_c$ is determined so that the received signal can always be analysed in a central zone of the range gate of width $\Delta\tau_c$ for which it has attenuation relative to the maximum level delivered by the matched filter below a given level $\alpha$; the high resolution analysis of the received signal for each range gate thus being range limited to a centred interval corresponding to $\Delta\tau_c$.

**10.** The method according to claim 9, **characterised in that**, with the matched filter defining natural range gates for which the gain varies by decreasing in a linear manner from the centre of the window to its lower and upper limits, the value of the time interval $\Delta\tau_c$ is determined by the following relation:

$$\Delta\tau_C = 2 \cdot T_i \cdot (1 - \alpha) \qquad \alpha \in \,]0,1[ \,,$$

where $\alpha$ represents the maximum tolerated attenuation, normalised at 1.

**11.** The method according to any one of the preceding claims, **characterised in that** with the high resolution analysis implementing double range and Doppler sampling along two identical sampling steps ($\delta\tau$, $\delta\varphi$) offset by a half-step by range, so that a range gate is meshed by elementary analysis cells (I, j) constituting two groups, a first group of cells defined by a parameter 1 using even integer values and a second group of cells defined by a parameter 1 using odd even values, the process implemented by the method further comprises:

- an additional step executed during the step of shaping received signal samples in the shape of M measurement vectors $x_m$, and the step of calculating the matrix of the $\hat{R}$ estimate of the covariance matrix R; which step involves the construction of two sets of measurement vectors $y_m[0]$ and $y_m[1]$, defined by the following relations:

$$y_k^m[0] = x_k^m$$

and

$$y_k^m[1] = \pm x_k^m$$ following the parity of the result of the complete division of $P(k)+\mu m$ by N;

- by a step of calculating estimates $\hat{R}[0]$ and $\hat{R}[1]$ of the covariance matrices R[0] and R[1] of the measurement vectors $y_m[0]$ and $y_m[1]$; this step substituting the step of calculating the estimate $\hat{R}$ of the covariance matrix R of the M measurement vectors $x_m$;
- a selection operation prior to the execution of the level one loop (75) of the fourth step (74), the purpose of which is to carry out, for the considered elementary analysis cell $(l_0, j_0)$, the test of the parity of the parameter $l_0$ and to determine which of the vectors $y_m[0]$ and $y_m[1]$ and which of the estimates $\hat{R}[0]$ and $\hat{R}[1]$ of the covariance matrix have to be used to execute the level one loop (75) for the considered cell, the level one loop being executed using $y_m[0]$ and $\hat{R}[0]$ if $l_0$ is even and using $y_m[1]$ and $\hat{R}[1]$ if $l_0$ is odd.

Fig. 1

Fig. 2

Fig. 3

# Fig. 4

# Fig. 5

Fig. 6

Fig. 7

71

Acquisition des paramètres motif:

$\{P(k)\}$, $0 \leq k < K$ et $\mu_m$, $0 \leq m < M$

72

Acquisition des M vecteurs $x_m$

Mise en forme

73

Calcul de la matrice de covariance $\hat{R}$ des M
vecteurs de mesures $x_m$ - Inversion

77 — Boucle sur les Doppler (paramètre j)

76 — Boucle sur les Distances (paramètre l)

743

Initialisation:

$z = 0$, $b = (\cdots, \exp[i \cdot \psi_k(l, j)], \cdots)^T$

75 — Boucle sur les motifs (paramètre m)

Chargement vecteur $x_m$

Incrémentation cohérente de z:  $z = z + x_m \cdot \exp[-i \cdot \Phi_m(l, j)]$

741

Dernière valeur de m?

Normalisation de z par 1/M

$$\gamma(l, j) = \frac{\left| b^H \cdot \hat{R}^{-1} \cdot z \right|^2}{b^H \cdot \hat{R}^{-1} \cdot b}$$

Détection = 1 si $\gamma(l, j) \geq$ Seuil

Détection = 0 si $\gamma(l, j) <$ Seuil

842

Dernière valeur de
Distance?

Dernière valeur de
Doppler?

74

Table des
détections

88

Fig. 8

EP 2 453 251 B1

Fig. 9

46

71

Acquisition des paramètres motif:
{P(k)}, 0≤k<K et μ_m, 0≤m<M

102

Acquisition des M vecteurs x_m
Constitution des vecteurs y_m[0] et y_m[1]

103

Calcul des matrices de covariance $\hat{R}[0]$ et $\hat{R}[1]$ des vecteurs de mesures y_m[0] et y_m[1] - Inversions

77 — Boucle sur les Doppler (paramètre j)

76 — Boucle sur les Distances (paramètre l)

743

Initialisation:
$z = 0$, $b = (\cdots, \exp[i \cdot \psi_k(l,j)], \cdots)^T$

144

l pair?

Ym = y_m[0] et $\hat{R} = \hat{R}[0]$     Ym = y_m[0] et $\hat{R} = \hat{R}[0]$

75 — Boucle sur les motifs (paramètre m)

Chargement vecteur x_m
Incrémentation cohérente de z: $z = z + x_m \cdot \exp[-i \cdot \Phi_m(l,j)]$

741

Dernière valeur de m?

Normalisation de z par 1/M
Calcul du module ou détection

742 / 842

Dernière valeur de Distance?

Dernière valeur de Doppler?

74

Table des détections

88

Fig. 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2124071 A